# EUROPEAN PATENT SPECIFICATION

(11) **EP 4 062 117 B1**
(45) Date of publication and mention of the grant of the patent: **06.12.2023**
(21) Application number: 20808004.4
(22) Date of filing: 20.11.2020
(51) Int. Cl.: F27B 3/20, C22B 4/00, C22B 5/16, C22B 7/00, C22B 7/04, F27B 3/22, F27D 99/00, C21B 13/12, C21B 3/06, C21B 13/00

(54) **IMPROVED PLASMA INDUCED FUMING FURNACE**
VERBESSERTER PLASMAINDUZIERTER RAUCHOFEN
FOUR DE FUMIGATION INDUITE PAR PLASMA AMÉLIORÉ

(30) Priority: 22.11.2019 EP 19210907
(43) Date of publication of application: 28.09.2022
(73) Proprietor: AURUBIS BEERSE, 2340 Beerse (BE)
(72) Inventor: CHINTINNE, Mathias, 2340 Beerse (BE); DE VISSCHER, Yves, 2340 Beerse (BE); GEENEN, Charles, 2340 Beerse (BE); COLETTI, Bert, 2340 Beerse (BE)
(74) Representative: Gevers Patents
(86) International application number: PCT/EP2020/082953
(87) International publication number: WO 2021/099598

(56) References cited:
- WO-A1-2010/072043
- US-A- 4 588 436
- US-A- 4 601 752
- US-A1- 2015 040 722
- US-A1- 2018 371 577

## Description

### FIELD OF THE INVENTION

The present invention relates to the field of pyrometallurgical recovery of non-ferrous metals, such as copper, lead, tin and zinc, from primary and/or secondary feedstocks, also known as recyclable materials, or from combinations thereof. More particularly, the invention relates to the recovery of volatile metals, such as zinc and lead, from a bath of molten slag and/or metal, by a process step which is usually referred to as fuming.

### BACKGROUND OF THE INVENTION

The production processes of non-ferrous metals such as copper, nickel, lead, tin and zinc, typically contain at least one and usually a plurality of pyrometallurgical process steps in which metals and metal oxides both occur in a liquid molten state, and wherein the metal oxides may be separated by gravity as a separate and lower density liquid slag phase from the higher density molten metal phase. If the slag phase is lean in valuable metals, the slag phase is usually withdrawn as a separate stream from the process, and this separation may lead to the production of a slag as the co-product from the metal production, a co-product that may also be called an "end slag" or a "final slag".

WO 2013/133748 A1 and US 2015/0040722 A1 disclose a two stage smelting reduction process for the production of molten iron from iron oxide bearing raw materials. The raw materials are processed first through a melting reactor and subsequently through a smelting reduction reactor. The atmospheres in the two reactors are kept strictly separate, such that in the smelting reduction reactor strongly reducing conditions may be maintained in order to increase the yield of the reduction to liquid iron melt, while more neutral conditions may be maintained in the melting reactor such that a better use can be made of the combustion energy from the burning of carbon-containing substances. The smelting reduction reactor is heated by submerged plasma generators, and the reducing atmosphere is obtained by the addition of a reducing agent such as coal or petro coke. The reaction produces a combustible gas mixture comprising CO and/or H₂ and typically also low contents of CO₂ and H₂O. This gas mixture, after cleaning for impurities, comprises mainly CO and/or H₂, and is recycled partly to the plasma generator heating the smelting reduction reactor. The remainder of the gas mixture is used for heating the melting reactor by further combustion, by means of another submerged plasma generator and/or by the injection of an oxygen containing gas and the combustible gas mixture into a tuyere below the surface of the melted furnace content. Any sulphur in the iron-containing raw material will typically be removed in the melting reactor, either into the reactor gasses or as part of a matte phase. Copper present in the raw material will typically be removed as metallic and/or matte copper in the bottom of the melting reactor. The process may have a much lower emission of CO₂ than a conventional blast furnace process. WO 2013/133748 A1 and US 2015/0040722 A1 are silent about any stripping or fuming of an evaporable metal or metal compound, and the equipment described is not provided for the recovery thereof as a separate product. The furnace described is thus not suitable for the fuming of an evaporable metal or metal compound from a metallurgical charge.

US 4,601,752 discloses a less complex process for manufacturing metals and/or generating slag, illustrated for the production of ferrochrome from chromite ore. Finely powdered oxide ore, possibly together with slag formers, is treated in a single chamber reactor comprising three zones, an upper oxidizing zone in which the material is preheated and possibly melted by the combustion of carbon monoxide and hydrogen gas rising up from the middle zone below with a gas containing oxygen, a middle zone consisting of a slag bath in which the preheated and possibly melted oxide material is at least partially reduced by the simultaneous injection of carbonaceous material and/or material containing hydrocarbon and thermal energy supplied primarily through plasma generators, and a lower zone at the bottom of the reactor into which the metal formed during the reduction process sinks and from which the metal product and the slag by-product may be tapped. The gas containing oxygen that is introduced into the middle zone is 99.5%wt pure oxygen. The oxygen addition is controlled to generate sufficient energy to preheat and melt the ore and additives added in the chamber, and this in the more oxidizing atmosphere governing in the middle and upper zones of the chamber reactor. The energy supplied through the plasma generators is controlled to drive the endothermic reactions between slag and carbon, under the reducing atmosphere that is governing in the lower part of the chamber reactor. The bigger part of the exhaust gas from the furnace is treated for the removal of H₂O and CO₂, and is returned to the furnace as the feed gas for the plasma generator. The remainder of the exhaust gas is removed from the process for use as fuel. US 4,601,752 is silent about any stripping or fuming of an evaporable metal or metal compound, and the equipment described is not provided for the recovery thereof as a separate product. The material balance in Figure 2 demonstrates that no gas other than the plasma gas and the oxygen gas are introduced into the furnace. Also this furnace is thus not suitable for the fuming of an evaporable metal or metal compound from a metallurgical charge.

WO 2016/078959 A1 describes a single bath furnace for smelting metallurgical charges and separating metals in flexible oxido-reduction conditions. The furnace has been equipped with a 3 MW plasma torch or burner, and in addition also with a 1.5 MW conventional so-called "oxygas" burner. The apparatus allows to perform oxidation steps and reduction steps in the same furnace. The document proposes to use the oxygas mode for smelting and/or for running mildly reducing or any oxidizing conditions in the smelting furnace, and to use the plasma mode for running the highly reducing conditions. If a very high energy input would be requested, the two heating technologies may also be run simultaneously.

The final slags that are withdrawn from pyrometallurgical processes producing non-ferrous metals are typically cooled, granulated and crushed/sized, and may be used in concrete production, as a substitute for rocks and gravel or as an aggregate in road construction. When ground, the slags may also be of interest for use as blasting sand or blasting grit.

Some of the substances that may be found in the slag products known in the art are considered potentially harmful to the environment. Primarily lead, but to some extent also zinc, are prime examples of such undesired substances. Zinc and lead are both metals which may at least partly be present in forms that are leachable from the slag, and the presence of significant levels thereof preclude many uses of the slag product, particularly in the economically more attractive applications, and may make the disposal of such slags in landfill much more complex and difficult, typically having to be considered as "hazardous waste". Acceptance of the use in certain applications is often determined by testing the leaching behaviour of slags. Typically, elements such as Pb and Zn are more prone to leaching and may cause a particular slag to fail such acceptance tests.

In addition, the applicants have found that zinc levels in the order of 5%wt and higher in slags slow down significantly the hardening of concrete and other construction compositions such as cements, when the slags are used in such construction compositions. This effect on the hardening rate represents an impediment for the use of slags containing significant amounts of Zn, as cementitious material and/or as aggregate in concrete or cements.

For at least some of the above reasons, non-ferrous metal producers have made attempts to reduce the levels of zinc, andif present also of lead, in their slag by-products, often by means of a so-called "fuming" step.

Michael Borell, in "Slag - a resource in the sustainable society", during "Securing the Future", an International Conference on Mining and the Environmental Metals and Energy Recovery, which took place in Skellefteå, Sweden in 2005, pp 130-138 of the proceedings, describes how, already since the 1960's, the liquid slag from an electric smelting furnace which produces a copper matte may be treated with reducing gases in a slag fuming furnace, also known as a "Box turner", a batch process step in which the zinc content in the copper smelting slag - and in extra zinc recycling material - is reduced down to 1 .2%wt. The fumed slag is further cleaned in a settling furnace where remaining droplets of copper alloy and copper sulphide are given some residence time to separate out into a heavier liquid phase before the slag is granulated, dewatered and may be sold for road construction purposes and for blasting. The reducing gases for the fumer are obtained by carefully mixing pulverized coal into the primary air injected into the furnace. The problem with this type of fuming is that the reaction of coal with air has to remain limited to producing primarily carbon monoxide, in order to maintain reducing conditions, and thus leaves most of the reaction heat, i.e. the part that is generated by the consecutive reaction oxidizing carbon monoxide to carbon dioxide, unavailable in the furnace core for driving endothermic reactions such as the reduction of metal oxides, such as zinc oxide, to the elemental metal which is capable of being stripped from the liquid bath. Another disadvantage of a box fumer is the high volumes of furnace exhaust gasses that are generated, and which need to be cooled, filtered and treated for recovery of the fumed metals and for cleaning up before emission to the atmosphere.

US 4,588,436 discloses a method of recovering metals from a batch of liquid slag in metallic or sulphidic form by reduction with a carbonaceous reducing agent, the thermal energy required to maintain the temperature and to perform the reduction and sulphidisation being provided by blowing gas preheated in a plasma generator below the surface of the slag bath. The vapour of volatile metals is condensed in a condenser, and are recovered as liquid metal. The non-volatile metals and sulphides formed are collected in the form of molten drops which are allowed to settle out of the slag. Reducing conditions necessarily need to be maintained all throughout the process as described as far as downstream after the condenser, in order to allow the condensation of the volatile metals in the condenser as a liquid metal product. The fumes from the furnace that are containing the volatile metals also represent a significant safety risk. They are highly reactive and have a high temperature. Any ingress of air, no matter how minor, will cause the fumes to self-ignite and possibly even to explode.

In "ScanArc's Development of Plasma Based Processes for Recovery of Metals and Heat Energy from Waste and Hazardous Waste Materials", presented at the International Workshop on Plasma Technologies for Hazardous Waste Destruction, Como, Italy, September 12-15, 1992, the company ScanArc Plasma Technologies AB proposed a non-transferred type submerged plasma generator for the reduction of slags from the metallurgical industry by fuming, whereby the content of heavy metals could be reduced, the metals recovered, and a vitrified non-leaching slag could be produced. The plasma generator is able to operate on most gases, at any chosen oxygen potential, to generate a very high useable enthalpy while keeping the gas flows relatively low, also with a lean gas mixture, and thus offers a major flexibility advantage. S.O. Santén delivered a very similar story at the 21st McMaster Symposium on Iron and Steelmaking, "Pretreatment and Reclamation of Dusts, Sludges and Scales", held at the McMaster University, Hamilton, Ontario, Canada, on May 11-13, 1993. The technology was, amongst others, commercially applied in Norway by Energy Recycling AS (ERAS) at the site of Hoyanger Sink Gjenvinning AS, as testified by the Environmental Permit Request "Recovering of Metal Values from EAF Dust by the Arcflashfuming Process", filed on 10 October 2002 and made publicly available about two weeks before the public hearing which was held on the subject on 31 October 2002. The request is also highly detailed about the process itself, the compositions of the raw materials and the products, including the flux components, a.k.a. the slag formers, on operating parameters, and on equipment design.

WO 2005/031014 A1 also describes such a fuming reactor for treating Zn-bearing residues using a submerged plasmafired tuyere attached to a plasma torch as its heat and gas source. WO 2008/052661 A1 describes a process for Zn fuming using a submerged plasma torch generating an oxidizing gas mixture, in which a solid reducing agent is fed to the melt.

WO 2016/046593 A1 describes the smelting and fuming of a metallurgical charge using a jet of hot gas from a submerged plasma torch, whereby the hot gas (more correctly "the plasma") produced has an enthalpy of at least 200 MJ/kmol. WO 2016/156394 A1 describes a process for the fuming of zinc from a metallurgical slag using a submerged plasma torch, whereby the zinc content of the produced slag was at most 1.00%wt and the clean slag was bringing the advantage of rapid hardening when the slag was finely ground and used as an active binder, in a 50/50 mixture with sodium silicate, for making tiles.

The furnaces for plasma fuming described in the above documents were using as their heat source solely plasma generators, i.e. burners that generate very high temperature heat by consuming electricity, a source of energy that in many countries is rather expensive.

The applicants have however found that the gas flow that may be produced by an industrial scale plasma generator remains limited in order to keep the electric arc in operation and stable, and in order that the enthalpy content of the hot gas from the plasma generator remains sufficiently high to form the desired plasma. This is explained in more detail further down in this document. There is thus a limit to the amount of stripping gas that may be made available by a plasma generator for stripping the evaporable substances out of the liquid bath in the furnace. This also limits the agitation that the gas injected from the plasma generators may cause in the liquid bath contained in the furnace.

In slag fuming, strongly reducing conditions are favoured, because the oxide of zinc and other evaporable metals may need to be reduced to their respective elemental forms for the metals to become evaporable. Strongly reducing conditions may be obtained by adding at least one reducing agent, which may be a gas, a liquid, a solid, or a combination thereof, preferably a solid reducing agent, preferably carbon, and this may be added to the hot plasma gas that is injected into the furnace. Because of the low amount of plasma gas available per plasma generator, this method of introducing extra reducing agent remains however limited. Further additional reducing agent may then be added to the furnace by dropping preferably a solid reducing agent onto the bath surface through the furnace filling opening.

This additional method for introducing extra reducing agent however leaves things to be desired.

A gaseous reducing agent, such as natural gas, cannot be introduced by this addition method via the furnace filling opening, as this would not reach the liquid bath in which it is supposed to deliver its reducing activity, because this would require the gaseous reducing agent to travel against the flow of the furnace exhaust gases. The injection of a liquid reducing agent, such as fuel oil, is also less preferred, because its vaporization causes a high volumetric expansion, causing foaming and splashing in the furnace, and part of the reducing agent may be entrained with the exhaust gasses before it may perform its intended function. The choice of suitable reducing agents is therefore quite limited.

The extra reducing agent that is conventionally added through the filling and outlet opening in the top of the furnace has to travel down through the gas space in the top of the furnace before it is able to reach the liquid surface. Just before the furnace gasses are entering the exhaust piping, typically extra air is introduced for oxidizing the vaporized elemental metals or metal compounds to their corresponding metal oxides. The oxides have much higher boiling points and melting points than the corresponding metals. The oxides formed readily appear as entrained flue gas dust and may be recovered as such further downstream in the furnace exhaust gas system. During its travel through the top of the furnace, the extra reducing agent is thus brought in contact with air, and at the high temperatures in the furnace at least a part of the reducing agent may readily be oxidized before the remaining part is able to reach the liquid bath surface. The heat generated by this oxidation is also not reaching the liquid bath, but remains with the exhaust gasses. Instead of beneficial, this heat becomes an extra burden for the exhaust gas treatment system.

The extra reducing agent that may be able to reach the liquid bath surface is not able to perform its function properly unless it becomes mixed well into the liquid bath. The gas flow available from the plasma generators however does not cause a very intense bath agitation.

The extra reducing agent also has to be able to travel down through the furnace gas space, against the rising flow of stripping gas, before it may reach the liquid bath surface. The particle or droplet size of the solid or liquid reducing agent therefore has to be sufficiently high, such that excessive entrainment of the particles and/or droplets with the stripping gas into the exhaust gas treatment system is avoided. Large particles however offer a limited surface per unit mass, and are therefore less reactive when they are mixed into the liquid bath. Most reducing agents, such as solid carbon, have a much lower density than the liquid bath in the furnace. Larger particles exhibit a higher buoyancy and therefore have a higher tendency to become floating on top of the liquid bath, which further reduces the contact surface between the solid reducing agent and the liquid bath.

This additional method for adding extra reducing agent therefore suffers from a significant lack of efficiency as well as effectiveness.

The plasma-generated fuming processes and furnaces known in the art therefore leave things to be desired. There remains a need for an improved plasma driven fuming process and apparatus that are offering an increased fuming rate, in particular by more bath agitation and/or more fuming gas, as well as the possibility to introduce extra reducing agent in a more efficient and more effective manner.

The present invention aims to obviate or at least mitigate the above described problem and/or to provide improvements generally.

### SUMMARY OF THE INVENTION

According to the invention, there is provided an apparatus and a process as defined in any of the accompanying claims.

The term metallurgical charge in the context of the present invention represents a broad family of compositions that may occur, as or as part of, a furnace content or furnace charge anytime during a pyrometallurgical process step, preferably a step that is part of the production process for a non-ferrous metal.

Preferably the metallurgical charge is a first slag, and the product obtained from the process according to the present invention is a second slag which has a content of the at least one evaporable metal or metal compound that is reduced in comparison with the content of the same evaporable metal or metal compound in the first slag.

The present invention provides for the use of the furnace according to the present invention for fuming at least one evaporable metal or metal compound from a metallurgical charge.

The applicants have found that the fuming of an evaporable metal or metal compound from a metallurgical charge in which the fuming step is using plasma-quality first hot gases from a plasma torch injected into the molten liquid bath by a first submerged injector, may be significantly improved by injecting extra gas via the at least one second submerged injector into the molten liquid bath.

The applicants have found that the extra gas introduced through an extra submerged injector provides an extra injection point and extra gas volume for stripping the evaporable metal or metal compound from the molten metallurgical charge. The applicants have found, with only the volume of the plasma or hot gases coming from the plasma torches available for stripping zinc from a copper smelter slag, that the zinc concentration in the gas bubbles that rise up through the molten slag bath may reach values up to as high as 40% molar. Because at best an equilibrium may be reached for the zinc fuming reaction (I),

ZnO + C →Zn(g) + CO(g) (I)

in spite of the favourable equilibrium constant that is enjoyed by the process at the very high temperatures of the plasma-quality hot gases from the plasma torch, the high Zn level in the gas bubbles has as a consequence that an appreciable amount of zinc oxide still remains in the liquid bath. The applicants have found that this concentration in the gas phase may significantly be reduced by the present invention, because of the extra gas that is made available for stripping via an extra injector, and further because of the increased presence of the reducing agent throughout the liquid bath that it allows to achieve. Because the amount of hot gases that may be produced by a plasma torch is limited, the applicants have found that it is advantageous to inject extra gas into the molten liquid bath, and particularly advantageous because of the injection via the at least one second submerged injector, different from the first submerged injector.

Another advantage of the present invention is thus also that the invention provides for at least one more submerged gas injection point into the molten liquid bath. This brings the advantage of extra agitation of the molten liquid bath inside the furnace, which improves the mixing in the bath, results in a more uniform distribution of the temperature and of any reducing agent that may be introduced into the furnace and hence also promotes the chemical reactions that are taking place, as well as obtaining a more uniform distribution of the reduced metal or metal compound formed by reaction with the reducing agent. The extra submerged gas injection point therefore brings also via these mechanisms an improvement to the fuming operation.

Yet another advantage of the present invention is that it provides for at least one extra means for further introducing reducing agent into the molten liquid bath inside the furnace. Because the at least one second injector is also a submerged injector, this extra means offers at the same time a wider selection of suitable reducing agent as compared to adding a large particle solid and/or a liquid reducing agent through the filling and outlet opening in the top of the furnace. Where with the conventional means any coke particles dropped into the furnace via the filling opening should preferably have an average particle size in the range of at least 6 mm, such that most of the particles are able to fall down in the furnace and entrainment thereof with the exhaust gasses leaving the furnace via the same opening remains limited, the second submerged injector offers a much wider selection of suitable reducing agent. The reducing agent introduced via the second submerged injector may be a gas, a liquid, a solid or combinations thereof, and, when solid, the reducing agent may have a much finer granulometry, which offers extra advantages of a high surface/volume ratio and a higher contact surface and thus a higher reactivity when the agent comes in contact with the molten liquid bath inside the furnace. The submerged introduction of the reducing agent also brings the advantage of a more intimate contact between the reducing agent and the liquid bath. This advantage applies for all states of matter of the reducing agent, but is found to be particularly prominent when the reducing agent is a solid, in particular a finely divided solid.

The present invention therefore achieves more than only providing more stripping gas for stripping the evaporable metal or metal compound from the metallurgical charge. An additional effect is the additional bath agitation, leading to more homogeneity in the bath inside the furnace, and another additional benefit is the possibility to inject more and optionally also a different and more effective reducing agent in a more efficient way. These extra effects are contributing to a further improved fuming because of improved conditions favouring the intended chemical reactions.

### DETAILED DESCRIPTION

The present invention will hereinafter be described in particular embodiments, and with possible reference to particular drawings, but the invention is not limited thereto, but only by the claims. Any drawings described are only schematic and are non-limiting. In the drawings, the size of some of the elements may be exaggerated and not drawn to scale for illustrative purposes. The dimensions and the relative dimensions in the drawings do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than those described and/or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

The term "comprising", as used in the claims, should not be considered as being limited to the elements that are listed in context with it. It does not exclude that there are other elements or steps. It should be considered as the presence provided of these features, integers, steps or components as required, but does not preclude the presence or addition of one or more other features, integers, steps or components, or groups thereof. Thus, the volume of "an article comprising means A and B" may not be limited to an object which is composed solely of agents A and B. It means that A and B are the only elements of interest to the subject matter in connection with the present invention. In accordance with this, the terms "comprise" or "embed" enclose also the more restrictive terms "consisting essentially of" and "consist of". By replacing "comprise" or "include" with "consist of" these terms therefore represent the basis of preferred but narrowed embodiments, which are also provided as part of the content of this document with regard to the present invention.

Unless specified otherwise, all ranges provided herein include up to and including the endpoints given, and the values of the constituents or components of the compositions are expressed in weight percent or % by weight of each ingredient in the composition.

As used herein, "weight percent," "wt-%," "percent by weight," "% by weight,", "ppm wt", "ppm by weight", "weight ppm" or "ppm" and variations thereof refer to the concentration of a substance as the weight of that substance divided by the total weight of the composition and multiplied by 100 or 1000000 as appropriate, unless specified differently. It is understood that, as used here, "percent," "%," are intended to be synonymous with "weight percent," "wt-%," etc.

It should be noted that, as used in this specification and the appended claims, the singular forms "a," "an," and "the" include plural referents unless the content clearly dictates otherwise. Thus, for example, reference to a composition containing "a compound" includes a composition having two or more compounds. It should also be noted that the term "or" is generally employed in its sense including "and/or" unless the content clearly dictates otherwise.

Additionally, each compound used herein may be discussed interchangeably with respect to its chemical formula, chemical name, abbreviation, etc..

Plasma is considered the 4^{th} state of matter, completing the series formed by solid, liquid and gas by an extra category at the high energy side. As the temperature of a gas is increased, at least a part of the atoms separate into ions and electrons, and an ionized gas is formed, which is "a plasma", but may be called a hot plasma gas, or by other sources even simply a "hot gas". The ionization of atoms may be partial or may be full, and the transition from gas into plasma is therefore rather unsharp. One defining feature of a plasma is that the ionisation needs to be sustained, which implies a high temperature.

In a non-transferred plasma arc torch, the plasma arc is generated between two electrodes inside a torch body through which a gas is flowing which is converted into plasma by the energy that is dissipated by the electric arc. Non-transferred plasma torches contrast with transferred plasma where the substance to be processed is placed in an electrically grounded metallic vessel and acts as anode, hence the reacting material should be an electrically conductive material. In transferred plasma the anode may also be made out of carbon. A carbon electrode however has the disadvantage of fixing the reducing conditions, thereby strongly reducing the versatility of the equipment with respect to the fuming process.

In order to obtain a plasma, the enthalpy content of the plasma gas produced by the plasma generator needs to be at least 1 kWh/Nm³. Plasma-quality hot gases therefore have an enthalpy content of at least 1 kWh/Nm³. Plasma torches known in the art may have a power of up to 5 or even 7 MW. A more typical plasma torch delivers about 3 MW, meaning that it cannot possibly generate more than 3000 Nm³ of plasma-quality hot gases. A more typical operating regime delivers a plasma having an enthalpy content in the range of 3.5-5.5 kWh/Nm³, meaning that a 3 MW plasma torch typically produces in the range of 600-800 Nm³/h of plasma-quality hot gases. A plasma torch having a particular electric power is therefore not capable of producing more than a corresponding volume of plasma-quality hot gases.

In the context of a plasma torch, the gas volumes as specified only account for the volumes of gas that are fed to the plasma torch, and are at standard/normal conditions. The volumes specified in the context of the present invention for the volumes of plasma-quality hot gasses produced by a plasma generator (PG) include only the gas that has passed through the PG itself, i.e. what is called the "primary gas" or the "primary volume of gas". They therefore do not take into account any extra gas that may in addition be fed directly to the downstream tuyere, what are called "secondary volumes of gas" in the context of the present invention, and which are usually mixed together with the plasma-quality hot gases coming from the plasma generator and which are injected together therewith into the bath. After this mixing, it is well possible that the mixed gas does not anymore comply with the qualifier "plasma-quality", because the enthalpy content per unit volume may not anymore comply with the lower limit specified elsewhere in this document for such gases. All these gas volume numbers are expressed at "normal" conditions. They thus also do not take into account any volumetric change that may occur by changes in temperature, pressure, chemical reaction or phase change that may occur in the plasma generator or in the tuyere downstream thereof.

By submerged injector is meant a connection pipe or tuyere between a gas source and an injection point that is located below the bath level or determined liquid level in a furnace, thus in a submerged position or a position that is intended for being submerged during operation. This ensures a more direct and intensive contact between the gas and the molten mass.

The tuyeres or injectors should preferably be short, so as to incur a minimum of wear and tear. This also ensures low thermal losses. The tuyeres may be cooled in order to reduce their wear and tear under the severe temperature conditions. The tuyeres may be mounted horizontally, piercing the wall of the furnace under the level of the bath. The torches or burners, whether plasma- or oxygas-fired, that may feed the tuyeres, are then located outside the furnace in a submergible (a.k.a. "submerged") position. Preferably when a liquid bath of a metallurgical charge is present in the furnace, they are constantly fed with gas to avoid the molten mass to flow back into the tuyere, which could otherwise cause submersion of the tuyere, possibly bringing serious damage to the tuyere and possibly also to the torch or burner that may be feeding the tuyere. Alternatively, the tuyeres may be mounted at an angle, still blowing into the bath, but allowing for the burners or torches to reside above the level of the bath and outside the furnace. This layout results in slightly longer tuyeres, but it may be arranged such that it also guarantees that no molten matter will be able to flow back into the burners or torches. Although this may be less recommended in large furnaces, the tuyeres could also be placed vertically. The tuyeres for injecting the extra gas may be arranged similarly, i.e. submerged and piercing the wall of the furnace, perpendicular to or at a different angle with the furnace wall.

By non-transferred plasma torch is meant a thermal gas generator using a plasma torch whereby an electrical arc is maintained between electrodes internal to the torch unit. A gas is entered through an input port into a flow-through chamber, in which an electric arc is maintained. The gas heats up to extreme temperatures and is expelled as plasma-quality hot gases being at least partially as a plasma, through an output port.

In between the plasma torch and the injection point into the furnace, extra substances may be added to the flow from torch to injection point, such as sheathing gas or dilution gas. In the context of the present invention, the amount of hot gases generated by a plasma torch are to include only the primary gas passing the plasma generator and to exclude secondary gas addition, such as any additional gas or other substance that may be added in between the plasma torch itself and the injection point or tuyere through which the plasma-quality first hot gases from the plasma torch are injected into the furnace.

By oxygas burner is meant a thermal gas generator mixing and burning a carbon-bearing fuel and an oxygen-bearing gas. In order to readily reach the high temperatures needed for the proper functioning of the oxygas burner, the oxygen-bearing gas is preferably rich in oxygen, more preferably substantially pure oxygen with low levels of inert components. This not only leads to higher flame temperatures, but also reduces the amount of inert gasses that come along and need to be handled by the furnace exhaust gas system. The mixing zone of the oxygas burner is inside the burner unit, while the combustion zone of the oxygas burner may be internal or external to the burner unit.

The metallurgical charge in the context of the present invention may be any composition that may be occurring in a liquid molten state in a pyrometallurgical process step for the production of a non-ferrous metal. The metallurgical charge may thus for instance be a molten metal composition comprising at least one non-ferrous metal, but may also be a molten slag phase occurring in such a process step. The metallurgical charge may be in the form of a molten liquid but may alternatively have a solid form of any kind, e.g. the charge may be in the form of aggregates obtainable by cooling or granulating a liquid molten phase from a furnace in which the pyrometallurgical process step has been performed.

A metallurgical slag is typically not a pure substance, but a mixture of many different components. Consequently a metallurgical slag does not have a clear melting temperature. In the art it has become common to use the term "liquidus temperature", which is the temperature at which the slag is fully liquid.

As mentioned in the background section, "fuming" is an operation that has already been used commercially in the art of pyrometallurgy as early as the 1960's. The skilled person is well aware that particular metals or metal compounds may be evaporated from a metallurgical charge by stripping with a gas, also called "fuming", and this at a pressure close to atmospheric and thus not needing deep vacuum like for distilling lead from tin. This capability is thanks to the vapour pressure of the evaporable metal or metal compound being much higher than these of most of the rest of the other compounds in the charge. Such a compound is therefore in the art considered and called "evaporable" from the metallurgical charge.

Well-known examples are the fuming of zinc from other pyrometallurgical compositions. This fuming of zinc may even be performed as part of another pyrometallurgical step, such as the removal of (usually a part of the) zinc via the exhaust fumes generated during a copper smelting step or a copper refining step. Less frequently, the fuming may be performed as a separate process step, e.g. like the "Box fumer" described by Michael Borell or by authors from ScanArc as discussed hereinabove. As also discussed above, when the metallurgical charge is a slag, the zinc may primarily be present in the charge as its non-volatile oxide ZnO, such that the fuming may need to be enabled by first reducing the oxide to elemental metal, a compound that may be stripped by fuming. Another example is the recovery of lead and tin as their oxides by volatilization thereof during the recovery of copper from copper-bearing scrap, as discussed in the background section of US 3,682,623. Also elements such as bismuth, indium and/or germanium are also known to be evaporable metals or to have metal compounds that are evaporable in the context of the present invention. Evaporable metal compounds may be the corresponding oxides, chlorides and/or sulphides.

In this document and unless specified differently, amounts of metals and oxides are expressed in accordance with the typical practice in pyrometallurgy. The presence of each metal is typically expressed in its total presence, regardless whether the metal is present in its elemental form (oxidation state = 0) or in any chemically bound form, typically in an oxidized form (oxidation state > 0). For the metals which may relatively easily be reduced to their elemental forms, and which may often occur as molten metal in the pyrometallurgical process, it is fairly common to express their presence in terms of their elemental metal form, even when the composition of a slag is given, wherein the majority of such metals may actually be present in an oxidized form. It is therefore that the composition of a slag such as the slag according to the present invention specifies the content of Fe, Zn, Pb, Cu, Sb, Bi as elemental metals. Less noble metals are more difficult to reduce under non-ferrous pyrometallurgical conditions and occur mostly in an oxidized form. These metals typically are expressed in terms of their most common oxide form. Therefore slag compositions are typically giving the content of Si, Ca, Al, Na respectively expressed as SiOs, CaO, Al₂O₃, NasO.

Because the oxygen in the slag that is bound to the more noble metals is not reflected in the composition that only provides the content of elemental metal, a slag composition reported according to this method often does not close up to a total approaching 100%wt.

In an embodiment of the apparatus or furnace according to the present invention, the apparatus is equipped for injecting through the at least one second injector a total amount of extra gas that is at least 10%, preferably at least 15%, more preferably at least 20%, 25%, 30%, 35%, 40%, 45%, 50% or 55%, more preferably at least 60%, preferably at least 70%, more preferably at least 75%, 80%, 90%, 100%, 110%, 120%, 125%, 130%, 140%, 150%, 175%, 200%, 225% and even more preferably at least 230% the amount of plasma quality hot gases that may be generated by the single element of the at least one plasma torch having the highest power rating when this torch is delivering a plasma having an enthalpy content of at least 3.5 kWh/Nm³, expressed in volumetric units at normal conditions. Optionally the apparatus is equipped for injecting through the at least one second injector an amount of extra gas that is at most 500%, preferably at most 450%, more preferably at most 400%, 350%, 325%, 300%, 290%, 280%, 275%, 270%, 265%, 260%, 250%, 240%, 230%, 220%, 210%, 200%, 180%, 165%, 150%, 135%, 120%, 110%, 100%, 90%, 80%, 70%, 60%, 50%, 40%, 30% and even more preferably at most 20% of the amount of plasma that may be generated by the single element of the at least one plasma torch having the highest power rating when this torch is delivering a plasma having an enthalpy content of at least 3.5 kWh/Nm³, expressed in volumetric units at normal conditions. The applicants have found that a major advantage of the present invention may already be achieved by injecting through the second injector an amount of extra gas flow that is closer to the lower limit as specified, especially when the extra gas flow is used as a carrier for extra reducing agent, in particular when a fine powder, such as coal powder or petcoke dust, is used as extra reducing agent. The applicants have found that the advantages of the present invention, explained at large in the summary section above, may be further enhanced when the amount of extra gas is further increased. The applicants however prefer to also comply with the upper limit as specified, in order to reduce the risk for splashing and foaming of the liquid bath, in order to reduce the vibrations and other types of dynamic stress on the tuyeres and also on the rest of the furnace construction, and in order to reduce the volumes of gases that need to be processed downstream of the furnace top, through the afterburning zone and the recovery zone.

In the afterburning zone of the furnace or apparatus according to the present invention, the at least one evaporable metal or metal compound in the fuming gas is oxidised to form an oxidised form of the at least one evaporable metal or metal compound. The purpose of this step is to reduce the safety hazard which is represented by the fuming gas and to enable an easier recovery of the metal from the fuming gas.

The fuming gas formed in the top part of the furnace represents a safety hazard. The gas is very hot. The vaporised metal or metal compound contained in the gas typically represents a reduced form of the metal and is thus also highly reactive when exposed to oxidising conditions such as in contact with oxygen. The fuming gas formed in the top part of the furnace therefore represents a significant safety hazard. Any oxygen entering the equipment in an uncontrolled manner and coming into contact with the fuming gas from the furnace, e.g. as part of environment air that may be sucked into the furnace top or downstream thereof in the exhaust treatment section of the apparatus, would readily react and oxidise the vaporised metal or metal compound, a reaction that is highly exothermic. Under insufficiently controlled conditions, e.g. with low mixing and/or particularly in relatively stagnant zones, such a combination of the hot gases with oxygen may almost inevitably lead to an uncontrolled combustion, possibly even a gas cloud explosion.

In a steady and relatively fast flowing stream of the gas and with good mixing, such a combination of the gas with a known ingress of air or another source of oxygen gas is able to create a flame front that may be kept steady and well controlled. The applicants therefore provide as part of the present invention an afterburning zone, in which, in a controlled manner, the hot gases from the top of the fuming furnace are sucked away, brought into a steady and relatively fast flow movement, and intensively mixed with oxygen such that the conditions in the gas mixture change from reducing to oxidising. The result of the good mixing and high temperature is that a flame front develops and becomes established in the gas flow that is withdrawn from the furnace top, and that this flame front may readily be maintained in a steady state. The applicants prefer to provide this flame front in the space above the fuming furnace, offering the advantage that radiation from the steady flame front may still reach the liquid bath in the furnace and return some of the heat from the flame front into the liquid bath.

Another result of the afterburning step or zone is that the safety hazard represented by the hot and highly reactive gas in the top of the furnace remains restricted to the gas volume upstream of the flame front.

The oxidised form of the at least one evaporable metal or metal compound is most typically a metal oxide. The oxide forms of the metal or the metal compound are typically non-volatile and usually form a dust of fine particles entrained in the gas flow, which makes them more readily recoverable therefrom.

The furnace according to the present invention further comprises a recovery zone for recovering the oxidized form of the at least one evaporable metal or metal compound from the gas formed in the afterburning zone. The process according to the present invention also comprises the corresponding step of recovering the oxidized form of the at least one evaporable metal or metal compound from the gas formed in the furnace and having been subjected to the afterburning step.

In an embodiment of the apparatus or furnace according to the present invention, the apparatus is comprising a plurality of second injectors and each injector is equipped for injecting through each second injector an amount of extra gas that is at least 10%, preferably at least 15%, more preferably at least 20%, 25%, 30%, 35%, 40%, 45% or 50%, more preferably at least 55%, preferably at least 60%, more preferably at least 65%, even more preferably at least 70%, yet more preferably at least 75%, preferably at least 80% of the amount of plasma quality first hot gases that may be generated by the single element of the at least one plasma torch having the highest power rating when this torch is delivering first hot gases having an enthalpy content of at least 3.5 kWh/Nm³, expressed in volumetric units at normal conditions. Optionally each second injector is equipped for injecting through the second injector an amount of extra gas that is at most 200%, preferably at most 190%, more preferably at most 180%, 170%, 160%, 150%, 140%, 130%, 125%, 120%, 115%, 110%, 105%, 100%, 95% and even more preferably at most 90% the amount of plasma quality hot gases that may be generated by the single element of the at least one plasma torch having the highest power rating when this torch is delivering a plasma having an enthalpy content of at least 3.5 kWh/Nm³, expressed in volumetric units at normal conditions.

In an embodiment of the furnace or apparatus according to the present invention, the apparatus is connected to at least one supply of compressed gas and/or equipped with a compressor for supplying compressed gas to the at least one second injector. The applicants have found that this provides a very convenient method for supplying extra gas to the furnace. The term "compressor" may be interpreted in its very broad meaning, and may e.g. include a gas fired turbine from which the combustion gasses may be made available at a pressure above atmospheric.

In an embodiment of the furnace or apparatus according to the present invention, the supply source for the extra gas to the apparatus comprises a source of a gas selected from the group consisting of hydrogen, nitrogen, air, carbon dioxide, argon, neon, helium, methane, ethane, propane, butane and combinations thereof, preferably nitrogen or air, more preferably air, even more preferably compressed air. The applicants have found that nitrogen and air, preferably compressed air, is a highly convenient gas as the basis for the extra gas to be injected into the furnace.

In an embodiment of the furnace or apparatus according to the present invention, the apparatus is comprising means for thermally treating the extra gas upstream of the at least one second injector in order to modify its enthalpy content, preferably the means for thermally treating the extra gas comprising at least one heat exchanger. If during operation the supply of gas to the furnace is at a temperature below the temperature of the liquid bath inside the furnace, the applicants prefer to heat up the gas before this is injected by the at least one second injector. This reduces the cooling effect that the injection of the extra gas may have on the furnace, and makes it easier to maintain the heat balance over the furnace. Preferably such heating makes at least partly use of the heat available in the system that is treating the exhaust gas from the furnace.

In an embodiment of the furnace or apparatus according to the present invention, the apparatus is further equipped with means for introducing a reducing agent into the extra gas upstream of the at least one second injector. As explained above in the summary section, the injection of the extra gas into the furnace via the at least one second injector represents an extra entry point for adding reducing agent into the furnace. In addition, because the at least one second injector is submerged, the choice of suitable reducing agent is very broad.

In an embodiment of the furnace or apparatus according to the present invention, the reducing agent to be introduced may be selected from a gas, a liquid, a solid, and combinations thereof. The applicants have found that the injection of extra gas in accordance to the present invention is a suitable carrier for a wide range of reducing agent in terms of the volume or weight of reducing agent that may conveniently be introduced, not only if the reducing agent is a gas or a liquid, but also if the reducing agent is a solid. In addition, a solid reducing agent may have a very fine granulometry, such that it offers a high surface/weight ratio and hence a high reactivity for engaging in the target chemical reactions.

In an embodiment of the furnace or apparatus according to the present invention, the apparatus comprises means for controlling the lambda of the extra gas to be injected into the bath by the second injector. With lambda ("λ") is meant the highly convenient parameter that is commonly used in relation to burners and combustible fuels, in particular with internal combustion engines, and which parameter represents the ratio with in the numerator the actual Air-to-Fuel ratio and in the denominator the Air-to-Fuel ratio of the same fuel at stoichiometry. If an air/fuel mixture is at stoichiometry for full combustion, its lambda is thus 1.0. The applicants apply this lambda parameter to every gaseous mixture in which oxygen is present as well as another substance that may readily undergo a reaction with oxygen, such as a combustible substance, where the other substance may be gas, liquid or solid, or a combination thereof. The applicants have found that a control of the lambda of the extra gas that is injected via the at least one second injector is a highly convenient means for controlling the atmosphere inside the furnace, thereby setting whether the atmosphere is neutral, oxidizing or reducing, as well as the degree of oxidation or reduction. The applicants have found that the extra addition point for reducing agent in the apparatus according to the present invention is highly versatile and the control of the lambda in the extra gas to be injected provides for a highly convenient method for controlling the redox conditions inside the furnace, and hence steering the chemical reactions that are occurring inside the furnace. The applicants have found that the combination of the injection of extra gas with the injection of hot gases from the plasma generator(s) allows for a wide range of redox conditions, whereby the redox conditions may be set substantially independent of the heat input into the furnace, unlike with the more conventional heating means such as using natural gas burners.

In an embodiment of the furnace or apparatus according to the present invention, the apparatus is equipped for injecting as part of the extra gas oxygen and a gaseous or liquid fuel, and for allowing the velocity of the extra gas in, or at another location upstream of, the at least one second injector to be higher than the flame propagation velocity of the fuel as part of the extra gas. The applicants have found that extra heat input into the furnace may be provided by injecting as part of the extra gas a gaseous or liquid fuel, preferably when the extra gas is also further comprising oxygen, even in the case that the extra gas not having been heated or ignited and therefore the fuel and the oxygen not having been reacted before they have reached the liquid bath. Typically the temperature of the liquid bath inside the furnace is largely above the temperature at which the fuel and the oxygen in the extra gas start reacting, even without a source of ignition, and they may readily react once having been injected into the liquid bath. The applicants prefer this embodiment because they have found that otherwise such reaction may travel upstream against the direction of flow of the extra gas in the conduits upstream of the at least one second injector, as well as in the second injector itself. Such a "backfire" phenomenon may lead to a release of heat in that conduit or injector and thus to an increase of temperature, and hence of wear and tear, or even explosion of the extra gas upstream and/or inside the injector. The applicants have found that the risk for equipment damage as a result of such heating up inside or upstream of the injector may be reduced if the apparatus is equipped for allowing the extra gas to reach a velocity, in the second injector or at another location upstream thereof, that is higher than the flame propagation velocity in the extra gas. A further advantage is that the extra gases are injected at a lower temperature, which further reduces the wear and tear on the second injector.

In an embodiment of the furnace or apparatus according to the present invention, the apparatus is equipped for limiting the amount of injected fuel such that the combustion of the injected fuel under the intended operating conditions for the furnace brings an enthalpy increase of the extra gas such that the extra gas at the injection point into the bath is at a temperature that is at most the temperature of the molten charge intended for being in the furnace during operation. This also contributes to lower wear and tear on the second injector.

In an embodiment of the furnace or apparatus according to the present invention, the at least one second injector is aiming its extra gas towards a second volume as part of the internal space of the furnace below the predetermined level that is different from the first volume into which the at least one first injector is aiming its first hot gases. The applicants have found that this feature enhances the advantages associated with the present invention and explained in the summary section above, a.o. an improved bath agitation, a more homogeneous liquid bath composition, improved chemical reactions, and most certainly an improved stripping of the evaporable metal or metal compound from the liquid bath.

In an embodiment of the furnace or apparatus according to the present invention, the at least one first injector is located in the side wall of the furnace, wherein the at least one second injector is located in the furnace wall opposite of the at least one first injector, preferably along the horizontal perimeter of the furnace running at substantially the same height as the at least one first injector. The applicants have found that this setup is highly convenient and effective for obtaining the desired effects of the present invention, as explained in the summary section above. The at least one first injector may inject its extra gas in a direction about perpendicular to the side wall of the furnace. The applicants prefer however to inject the extra gas in an angle with a horizontal plane, either downward or upward, because the extra gas brings an extra drive for a vertical circulation in the liquid bath, which improves the bath agitation and also draws more reducing agent that may be floating on top of the liquid bath into the bulk of the liquid bath. The applicants prefer the direction to be upward, because that may be better in creating a torus-shaped circulation path in the liquid bath.

In an embodiment of the furnace or apparatus according to the present invention, the apparatus comprises at least two and preferably at least three first injectors distributed along a horizontal perimeter of the furnace side wall, whereby the at least one second submerged injector is aiming its extra gas towards a volume as part of the internal space of the furnace below the predetermined level about close to the furnace vertical axis and/or the at least one second submerged injector being located along the furnace side wall at about equal distance in between the locations of the two closest of the at least two first injectors. In the embodiment with the at least one second submerged injector being located along the furnace side wall, the at least one second injector is preferably aiming its injected extra gas towards a volume as part of the internal space of the furnace below the predetermined level that is different from the volumes towards which the first injectors are aiming their first hot gases to. The applicants have found that this enhances the advantageous effects obtained by the present invention and explained at large in the summary section above.

In an embodiment of the furnace or apparatus according to the present invention, the apparatus is further equipped for introducing a reducing agent into the first hot gases upstream of the at least one first injector. This brings the advantage that even more reducing agent may be introduced into the furnace above the amount that may be introduced by other means, e.g. together with the extra gas and/or added via the feed port. The amount of additional reducing agent that may be introduced via the at least one first injector is independent of the enthalpy input into the furnace. This method of introducing reducing agent is therefore highly convenient for controlling the redox property of the atmosphere inside the furnace. An extra advantage is that the reducing agent introduced via the first injector is introduced together with the highest temperature enthalpy input into the furnace. At a higher temperature, the equilibrium constant of the desired zinc fuming reaction (I) is in favour of the formation of zinc metal which is an evaporable substance. The effectiveness of the reducing agent introduced with the first hot gases is therefore higher, and because also this injection is via a submerged injector it is also highly efficient because of the highly intimate contact of the first hot gases with the liquid in the liquid bath, meaning that there is little of this reducing agent that may reach the liquid bath surface without having made contact with liquid from the bath.

In an embodiment of the furnace or apparatus according to the present invention, the reducing agent to be introduced upstream of the at least one first injector may be selected from a gas, a liquid, a solid, and combinations thereof. The applicants have found that the introduction of the first hot gases from the plasma torch via the first injector provides a very versatile option for introducing extra reducing agent, because it is highly tolerant with respect to the choice of reducing agent, in particular with respect to its state of matter but also with respect to the quantity that may be introduced.

In an embodiment of the furnace or apparatus according to the present invention, the apparatus is further equipped with at least one oxygas burner for the generation of extra first hot gasses above the quantity of plasma quality first hot gases from the at least one plasma torch. This brings the advantage that extra enthalpy input into the furnace may be provided above the enthalpy input provided by the plasma generators. This may facilitate the maintenance of an advantageous heat balance over the furnace, the apparatus and/over the overall process.

In an embodiment of the furnace or apparatus according to the present invention, wherein the apparatus is equipped with at least one submerged third injector for injecting the extra first hot gasses below the determined level. This brings the advantage of a highly intimate contact between the extra first hot gasses and the liquid bath, which is favourable for the heat transfer from the extra first hot gasses towards the liquid bath inside the furnace. This makes the heat transfer highly effective.

In an embodiment of the furnace or apparatus according to the present invention comprising the at least one oxygas burner, the at least one oxygas burner is located below the determined level.

In an embodiment of the apparatus according to the present invention, the plasma torch is located below the determined level.

The features of locating a generator of hot gas and/or plasma below the determined level allows for very short connection pipes, the generator of hot gas or plasma being locatable at the level of the injection point, on the outside of the furnace. Measures are however needed to avoid flooding of the generator by the molten mass inside the furnace. A continuous protective gas flow through the injector may therefore be used.

In an embodiment of the furnace or apparatus according to the present invention, the afterburning zone is provided above the determined level as part of the single-chamber furnace. Preferably, the afterburning zone is provided above the liquid bath because of the radiation heat that may returned from the afterburning zone onto the liquid bath in the furnace. As explained elsewhere in this document, in the afterburning zone oxidizing conditions are established with the purpose of oxidizing the evaporable metal or metal compound into the corresponding oxidised form. One major effect, obtained with a complete conversion of the oxidation of the reduce form generated in the fuming step, is that the gas containing the oxidised form is not anymore highly combustible, and hence that the safety hazard represented by the gas from the fuming step is contained and is removed downstream from the afterburning zone or step. A secondary purpose of the afterburning step is to oxidise also most of the carbon monoxide, which may have been generated in the fuming step by the reaction of carbon in the reducing agent with e.g. the oxygen available in the slag as metal oxide, into carbon dioxide, and/or to oxidise hydrogen into water. This further reduces the safety hazard, and also makes the further processing of the furnace exhaust gas, including any eventual emission to the atmosphere, easier, safer and more environmentally acceptable.

Preferably the applicants perform the afterburning by the introduction of an oxidising agent in to the fuming gas, preferably the oxidising agent being oxygen.

In an embodiment of the furnace or apparatus according to the present invention, the afterburning zone comprises a connection with a supply source of an oxygen containing gas, preferably selected from air, oxygen enriched air and purified oxygen gas. The applicants prefer to use air because of its ready availability. Preferably the applicants introduce the oxygen by injecting the oxygen containing gas into the flow of fuming gas leaving the top of the furnace. Typically the fuming gas leaving the top of the furnace is at a pressure below atmospheric because of the draft that is generated by the downstream exhaust gas treatment which typically comprises at least a furnace stack and optionally an induced draft fan upstream of the stack. The oxygen containing gas may thus be made available at atmospheric pressure. The applicants prefer to provide the oxygen containing gas at a pressure above atmospheric, because this provides a higher pressure difference between the source of the oxygen containing gas and the fuming gas being drafted into the furnace exhaust gas treatment equipment by the natural or induced draft generated as explained. A higher pressure difference brings the advantage that the flow of the oxygen containing gas into the fuming gas is easier to control more accurately.

In a simpler embodiment, the applicants provide at least one opening to the atmosphere in the duct connecting the furnace with the downstream exhaust gas processing equipment through which environment air may be sucked in. Preferably the size of the opening in the duct is controllable. A plurality of openings may be provided, offering the advantage of a faster and more intimate mixing of the oxygen containing gas with the fuming gas.

The applicants have found that in the afterburning zone a steady flame front may be formed in which the oxidation reactions are taking place. The applicants have found that the flame front is more stable as the fuming gas is made to move faster, and as the mixing with the oxygen containing gas is faster and/or more intense.

The applicants prefer to provide to the afterburning zone or step a significant excess of the oxidising agent, such that the oxidising reactions in the afterburning zone are substantially complete. This assures that the safety hazard is fully contained to the afterburning zone or step and upstream thereof. It also assures that the ultimately emitted exhaust gas is substantially free of carbon monoxide, which is a toxic gas, and also of hydrogen.

In an embodiment of the furnace or apparatus according to the present invention, the apparatus further comprises a cooling zone for cooling the gas that is forming or has been formed in the afterburning zone upstream of the recovery zone. The cooling may be performed in a variety of suitable ways.

One suitable way is to provide a so-called waste heat boiler, i.e. a heat exchanger in which the heat from the gas from the afterburning step is used to generate steam. The advantage is that the heat is used to generate steam, and that steam may be used elsewhere for delivering power or heat where this may be put into use. The high investment cost for a waste heat boiler in comparison with other alternatives may therefore be compensated by the value of the steam that is generated. A steam consumer of the appropriate size is however not always available in the neighbourhood of the furnace according to the present invention.

Another suitable way of cooling is to make use of a radiation water cooler, in which the water on the coolant side is circulated sufficiently fast in order to avoid steam generation, such that only hot water is produced. Preferably the water is recycled to the radiation water cooler once most of the heat has been removed from it. This hot water may preferably also be put to an economically valuable use into a heating service, such as for heating a plurality of residential buildings, and more preferably the water is recycled after having used for the heating service. In addition and/or as alternative, the hot water may be cooled in a conventional cooling tower. The amount of water that evaporated in the cooling tower needs to be replenished before returning the remaining water to the radiation water cooler. Because in such a water cycle salts have are building up, the cycle has to typically also provide a bleed stream and the amount of bleed water also needs to be replenished. A radiation water cooler has also the advantage that it does not alter the amount of gas that needs to be processed downstream on the gas side of the cooling step. Yet another advantage of a radiation water cooler is that this cooling step may be combined with the afterburning zone, meaning that the afterburning step may be performed inside the radiation water cooler. This embodiment brings a further simplification of the equipment, and hence a reduction of the investment cost.

Yet another way of cooling is spray cooling or "evaporative cooling". This method involves the injection of water into the hot gas stream, and the injected water withdraws its heat of evaporation from the gas stream. This method is highly effective and fast, and requires little equipment and hence a low investment cost. The drawback is that this method increases the volume of gas that needs to be processed downstream of the cooling step.

Another suitable way is the use of a gas/gas heat exchanger with the gas from the afterburning step on one side and e.g. environment air on the other side of the heat exchanger. This brings the advantage of being compact in volume and not increasing the flow of the gas that needs to be processed downstream of the cooling step.

The preferred cooling step may comprise a number of similar or different cooling methods selected from the ones listed above. A suitable combination may for instance be to provide on the hot inlet side first a radiation water cooler to bring the temperature of the gas from the afterburning step from e.g. about 1500°C down to e.g. about 1000°C, followed by a spray cooler to bring the gas temperature further down to about 200°C, which may be sufficiently low for the equipment used in the subsequent recovery zone.

In an embodiment of the furnace or apparatus according to the present invention, the recovery zone comprises a gas filtering zone, preferably the gas filtering zone comprising at least one gas filter cloth. The applicants prefer to use filter sleeves made of cloth of polytetrafluorethylene (PTFE), because these are able to withstand processing temperatures up to about 260°C.

Typically the last equipment in the gas processing sequence is a blower or ventilator for pushing the gas from the recovery zone into the emission stack and also for enhancing the draft upstream by sucking the gas through the sequence of afterburning zone, optional cooling zone, and recovery zone. The use of a blower or ventilator brings the advantage that the natural draft requirement of the emission stack are reduced, such that the stack may be built less high.

In an embodiment of the furnace or apparatus according to the present invention, the furnace has a generally cylindrical shape, preferably the furnace also having a conical lower section tapering towards a smaller circular bottom, whereby the cylindrical shape of the furnace has a largest internal diameter d and the furnace has a total internal height h from bottom to top, the ratio of h to d being at least 0.75, preferably at least 0.80, more preferably at least 0.85, even more preferably at least 0.90, yet more preferably at least 0.95, preferably at least 1.00, more preferably at least 1.05, even more preferably at least 1.10, yet more preferably at least 1.15, preferably at least 1.20, more preferably at least 1.25, even more preferably at least 1.30. In the context of the present invention, the internal diameter of the furnace is the distance between two opposite surfaces of the furnace wall, and where a refractory lining is present, the surfaces of the refractory lining in the furnace at the time of the construction. The inner diameter is considered to exclude any possible build-up on those surfaces of frozen slag, a layer that may be called "freeze lining". The applicants have found that this feature brings the advantage of less splashing of the molten matter in the furnace bath during operation. Such splashed molten matter may solidify against any solid and cooler surface, such as the furnace feed port and/or the furnace exhaust piping, where it may cause problems because of its high temperature and where such a material growth may cause other operational problems such as impairing the gas flow and/or the feed introduction capabilities.

In an embodiment of the furnace or apparatus according to the present invention, the furnace comprises the conical lower section and wherein the determined level is about at the height where the cylindrical shape converts into the conical lower section. The applicants have found that the conical lower section provides for a highly convenient setup in which most of the submerged injectors and preferably also the corresponding providers of the feeds for those submerged injectors may be arranged for a very effective injection into the liquid bath inside the furnace with a minimum of connection piping, while also limiting the amount of plot space that the apparatus may be occupying, This arrangement brings the advantage of bringing the first injectors closer to the central vertical axis of the furnace, which is beneficial for the bath agitation. This arrangement also provides a higher agitation in the bottom section where the first hot gases are injected and where also - in the embodiments wherein the apparatus is provided with tuyeres in the furnace wall of the smaller bottom section - the extra gas is injected, while in the top section the splashing is less thanks to the larger diameter. A further advantage is that in the top section a liquid flow in the form of a torus may be formed, which is beneficial for pulling any particles of solid reducing agent that may be floating on top of the liquid level inside the bath.

In an embodiment of the furnace or apparatus according to the present invention, the furnace is provided with an internal refractory lining, in particular where contact with molten metal and/or matte may occur. This brings the advantage that metallurgical charges having high melting temperatures and/or high liquidus temperatures may be processed or treated. The refractory lining is preferably provided in the bottom section, where there may occur a free molten metal and/or matte phase, bringing the benefit of an increased resistance from chemical and/or mechanical attack from theses liquids.

In an embodiment of the furnace or apparatus according to the present invention, wherein the peripheral walls of the furnace are water-cooled. The applicants have found that this is beneficial to a longer life resistance of the equipment against the possibly very high temperatures that may occur inside the furnace during operation. An additional benefit is that a freeze lining may form inside the furnace against the side walls of the furnace. Such a freeze lining may offer additional thermal insulation against the possibly very high temperatures inside the furnace during operation, and offer additional protection for the refractory material that may have been provided against the furnace walls.

In an embodiment of the process according to the present invention, the amount of extra gas injected via the at least one second injector is at least 10%, preferably at least 15%, more preferably at least 20%, 25%, 30%, 35%, 40%, 45%, 50% or 55%, more preferably at least 60%, preferably at least 70%, more preferably at least 75%, 80%, 90%, 100%, 110%, 120%, 125%, 130%, 140%, 150%, 175%, 200%, 225% and even more preferably at least 230% of the amount of plasma quality first hot gases that may be generated by the single element of the at least one plasma torch having the highest power rating when this torch is delivering first hot gases having an enthalpy content of at least 3.5 kWh/Nm³, expressed in volumetric units at normal conditions. Optionally the amount of extra gas injected via the at least one second injector is at most 500%, preferably at most 450%, more preferably at most 400%, 350%, 325%, 300%, 290%, 280%, 275%, 270%, 265%, 260%, 250%, 240%, 230%, 220%, 210%, 200%, 180%, 165%, 150%, 135%, 120%, 110%, 100%, 90%, 80%, 70%, 60%, 50%, 40%, 30% and even more preferably at most 20% of the amount of plasma that may be generated by the single element of the at least one plasma torch having the highest power rating when this torch is delivering a plasma having an enthalpy content of at least 3.5 kWh/Nm³, expressed in volumetric units at normal conditions. The applicants have found that a major advantage of the present invention may already be achieved by injecting through the second injector an amount of extra gas flow that is closer to the lower limit as specified, especially when the extra gas flow is used as a carrier for extra reducing agent, in particular when a fine powder, such as coal powder or petcoke dust, is used as extra reducing agent.

In an embodiment of the process according to the present invention wherein the apparatus comprises a plurality of second injectors, the amount of extra gas that is injected via each second injector is at least 10%, preferably at least 15%, more preferably at least 20%, 25%, 30%, 35%, 40%, 45% or 50%, more preferably at least 55%, preferably at least 60%, more preferably at least 65%, even more preferably at least 70%, yet more preferably at least 75%, preferably at least 80% of the amount of plasma quality first hot gases that may be generated by the single element of the at least one plasma torch having the highest power rating when this torch is delivering first hot gases having an enthalpy content of at least 3.5 kWh/Nm³, expressed in volumetric units at normal conditions. Optionally each second injector is injecting an amount of extra gas that is at most 200%, preferably at most 190%, more preferably at most 180%, 170%, 160%, 150%, 140%, 130%, 125%, 120%, 115%, 110%, 105%, 100%, 95% and even more preferably at most 90% of the amount of plasma quality first hot gases that may be generated by the single element of the at least one plasma torch having the highest power rating when this torch is delivering first hot gases having an enthalpy content of at least 3.5 kWh/Nm³, expressed in volumetric units at normal conditions.

In an embodiment of the process according to the present invention, the extra gas injected via the at least one second injector comprises at least one gas selected from the group consisting of hydrogen, nitrogen, air, carbon dioxide, argon, neon, helium, methane, ethane, propane, butane and combinations thereof, preferably nitrogen or air, more preferably air, even more preferably compressed air. The applicants have found that nitrogen and air, preferably compressed air, is a highly convenient gas as the basis for the extra gas to be injected into the furnace.

In an embodiment of the process according to the present invention, the extra gas injected via the at least one second injector is thermally treated upstream of the at least one second injector in order to modify its enthalpy content, preferably the thermal treatment of the extra gas being performed by using at least one heat exchanger. If the gas is supplied to the furnace at a temperature below the temperature of the liquid bath inside the furnace, the applicants prefer to heat up the gas before this is injected by the at least one second injector. This reduces the cooling effect that the injection of the extra gas may have on the furnace, and makes it easier to maintain the heat balance over the furnace. Preferably such heating makes at least partly use of the heat available in the system that is treating the exhaust gas from the furnace.

In an embodiment of the process according to the present invention, the temperature of the extra gas entering the at least one second injector is at most equal to the temperature of the bath in the furnace, preferably at least 20 degrees Celsius below the temperature of the bath, more preferably at least 50, even more preferably at least 100, yet more preferably at least 200 degrees Celsius below the temperature of the bath in the furnace. This brings the advantage of having less wear and tear on the injection point, or the tuyere. Optionally the temperature of the extra gas entering the at least one second injector is at most 400 degrees Celsius below the temperature of the bath in the furnace, preferably at most 350, more preferably at most 300, even more preferably at most 250, preferably at most 200, more preferably at most 150, even more preferably at most 100, preferably at most 75, more preferably at most 50, even more preferably at most 25 degrees Celsius below the temperature of the bath in the furnace. This brings the advantage of a lower risk for a build-up of solidified slag on the mouth of the injection point or tuyere, which may be caused by the cooling effect of the extra gas passing through the injection point or tuyere and entering the furnace.

In an embodiment of the process according to the present invention, the extra gas injected via the at least one second injector is comprising at least one first reducing agent, preferably the at least one reducing agent being selected from the group consisting of any substance that contains elements other than oxygen and noble gasses and that are capable of reacting with oxygen under the conditions inside the furnace, preferably any substance containing carbon and/or hydrogen in a chemically bound form susceptible for oxidation, more preferably the reducing agent being selected from the group consisting of natural gas, gaseous and/or liquid hydrocarbon, fuel oil, rubber, plastic, preferably a plastic made of at least one polyolefin, more preferably waste rubber and/or plastic, charcoal or coke, and combinations thereof, even more preferably being coke, yet more preferably petcoke, the latter being a highly carbon rich by-product from crude oil processing. As explained above in the summary section, the injection of the extra gas into the furnace via the at least one second injector represents an extra entry point for adding reducing agent into the furnace. In addition, because the at least one second injector is submerged, the choice of suitable reducing agent is very broad.

In an embodiment of the process according to the present invention using the first reducing agent, the first reducing agent is a solid, preferably in the form of particulates, more preferably the particulates having an average particle diameter of at most 6 mm, even more preferably at most 5, 4, 3, 2 or 1 mm, preferably at most 500 µm, more preferably at most 250, 200, 150, 100 or even 50 µm. The applicants have found that suitable solid reducing agents are available in a wide variety and qualities and from a variety of sources. In addition, several of these suitable solid reducing agents have little to no alternative dispositions in which they are able to demand any significant economic value. These solid reducing agents therefore represent a highly interesting source for use in accordance with the present invention. As explained elsewhere in this document, the smaller particle size brings the advantage of offering a higher surface to weight ratio, as well as less buoyancy, and hence a more efficient as well as a more effective use of the reducing agent.

In an embodiment of the process according to the present invention, the extra gas injected via the at least one second injector further comprises oxygen and an amount of fuel suitable for, by its combustion under the operating conditions in the furnace, bringing an enthalpy input to the furnace which compensates for at least 50% of the cooling effect that the extra gas may bring to the furnace in case the extra gas is at the injection point at a temperature that is below the temperature of the molten charge in the furnace. The applicants prefer to add an amount of fuel that compensates for at least 75%, and preferably at least 100% of the cooling effect as described. The applicants have found that extra heat input into the furnace may be provided by injecting as part of the extra gas a gaseous or liquid fuel, preferably when the extra gas is also further comprising oxygen, more preferably at least sufficient oxygen for reaching the desired lambda in the extra gases. Typically the temperature of the liquid bath inside the furnace is above the temperature at which the fuel and the oxygen in the extra gas start reacting, even without a source of ignition. With the presence of sufficient oxygen in the extra gas, the added fuel is therefore combusting readily once the extra gas comes in contact with the molten furnace charge. The applicants have found that the gas flows may readily be set sufficiently high such that the combustion reaction does not travel upstream against the direction of flow of the extra gas in the second injector and/or in the conduits leading up to the at least one second injector. The risk for such a "backfire" phenomenon is thus very low. The applicants have found that the risk for equipment damage as a result of such heating up inside or upstream of the injector may readily be eliminated if the extra gas is reaching a velocity, in the second injector or at another location upstream thereof, that is higher than the flame propagation velocity in the extra gas. The applicants have found that this condition may quite readily be fulfilled.

In an embodiment of the process according to the present invention, the extra gas injected via the at least one second injector has a first lambda, accounting for only the gaseous and liquid combustibles, of less than 1.0, preferably at most 0.9, more preferably at most 0.8, even more preferably at most 0.7, yet more preferably at most 0.6. With lambda ("λ") is meant the highly convenient parameter that is commonly used in relation to burners and combustible fuels, in particular with internal combustion engines, and which parameter represents the ratio having in the numerator the actual Air-to-Fuel ratio and in the denominator the Air-to-Fuel ratio of the same fuel at stoichiometry. If an air/fuel mixture is at stoichiometry, its lambda is thus 1.0. The applicants apply this first lambda parameter to every gaseous mixture in which oxygen is present as well as another substance that may readily undergo a reaction with oxygen, such as a combustible substance, where the other substance is a gas or liquid, or a combination thereof. The applicants have found that, if no solid reducing agent is being employed in the process, a control of the first lambda of the extra gas that is injected via the at least one second injector is a highly convenient means for controlling the atmosphere inside the furnace, thereby setting whether the atmosphere is neutral, oxidizing or reducing, as well as the degree of oxidation or reduction. The applicants have found that the extra addition point for reducing agent in the apparatus according to the present invention is highly versatile and the control of the first lambda, and/or the second lambda as described further below, in the extra gas to be injected provides for a highly convenient method for controlling the redox conditions inside the furnace, and hence steering the chemical reactions that are occurring inside the furnace. The applicants have found that the combination of the injection of extra gas with the injection of first hot gases from the plasma generator(s) allows for a wide range of redox conditions, whereby the redox conditions may be set substantially independent of the heat input into the furnace, unlike with the more conventional heating means such as using natural gas burners.

The applicants also consider a second lambda that takes into account all combustibles that are employed in the process and added into the extra gas, i.e. including any solid combustibles such as most of the reducing agents described above in this document. In an embodiment of the process according to the present invention, the extra gas injected via the at least one second injector has a second lambda of less than 0.6, preferably at most 0.5, more preferably at most 0.4, even more preferably at most 0.3, yet more preferably at most 0.2. The applicants have found that such low second lambda values are highly beneficial for the fuming of metals from metallurgical slag, such as zinc.

In an embodiment of the process according to the present invention, the extra gas injected via the at least one second injector is combustible and the extra gas is in the at least one second injector reaching a velocity that is higher than the flame propagation velocity of the extra gas. The applicants have found that extra heat input into the furnace may be provided by injecting as part of the extra gas a gaseous or liquid fuel, preferably when the extra gas is also further comprising oxygen. Typically the temperature of the liquid bath inside the furnace is above the temperature at which the fuel and the oxygen in the extra gas start reacting, even without a source of ignition. The applicants have found that such reaction may travel upstream against the direction of flow of the extra gas in the conduits leading up to the at least one second injector, as well as in the second injector itself. Such a "backfire" phenomenon may lead to a release of heat in that conduit of injector and thus to an increase of temperature of the extra gas upstream and/or inside the injector. The applicants have found that the risk for equipment damage as a result of such heating up inside or upstream of the injector may readily be reduced or even eliminated if the extra gas is reaching a velocity, in the injector or at another location upstream thereof, that is higher than the flame propagation velocity in the extra gas.

In an embodiment of the process according to the present invention, the at least one evaporable metal or metal compound is a metal in its elemental form or an evaporable metal containing compound, preferably the metal being selected from the group consisting of zinc, lead, tin, bismuth, cadmium, indium, germanium, and combinations thereof, whereby the evaporable compound may for instance be an oxide, a sulphide, a chloride, or a combination thereof. The applicants have found that the process according to the present invention is highly suitable for removing by evaporation a metal or metal containing compound selected from the prescribed list. The applicants have found that this process provides a highly competitive alternative for recovering one of the metals as specified from metallurgical charges.

In an embodiment of the process according to the present invention, wherein a metal less noble than the metal in the evaporable metal or metal compound is added into the furnace, preferably iron and/or aluminium, preferably the less noble metal being added in the form of particulates, more preferably the particulates having an average particle diameter of at most 5, 4, 3, 2 or 1 mm, preferably at most 500 µm, more preferably at most 250, 200, 150, 100 or even 50 µm, whereby the concentration of the less noble metal in the slag is preferably kept below the solubility limit thereof in the slag at process conditions. The applicants have found that this brings the advantage of an improvement in the fluidity of a slag phase that may be present inside the furnace as part of the liquid bath. The applicants have however found that it is preferred to keep the concentration of these compounds below the solubility limit of the compound in the liquid bath, because exceeding the solubility may cause the formation of a separate phase in the furnace of the particular compound. Such a separate phase risks to impair the contact between the other liquid phase in the liquid bath with the injected extra gas and/or first hot gas generated by the plasma torch and/or the extra first hot gases generated by the oxygas burner, if present, and hence may impair the chemical reactions that are desired in the furnace, in particular resulting in an impairment of the evaporation of the evaporable metal or metal compound.

In an embodiment of the process according to the present invention, a second reducing agent is added to the plasma quality first hot gases upstream of the at least one first injector. This brings the advantage that even more reducing agent is introduced into the furnace above the amount that may be introduced together with the extra gas. The amount of additional reducing agent that may be introduced via the at least one first injector is independent of the enthalpy input into the furnace. This method of introducing reducing agent is therefore highly convenient for controlling the redox property of the atmosphere inside the furnace. An extra advantage is that the reducing agent introduced via the first injector is introduced together with the highest temperature enthalpy input into the furnace. At a higher temperature, the equilibrium constant of the desired zinc fuming reaction (I) is in favour of the formation of zinc metal which is an evaporable metal or metal compound. The effectiveness of the reducing agent introduced with the first hot gases from the plasma torch is therefore higher, and because also this injection is via a submerged injector it is also highly efficient because of the highly intimate contact of the first hot gases with the liquid in the liquid bath, meaning that there is little of this reducing agent that may reach the liquid bath surface without having made contact with liquid from the bath.

In an embodiment of the process according to the present invention using the second reducing agent, the second reducing agent is selected from a gas, a liquid and a solid, and combinations thereof, preferably the second reducing agent being selected from the group consisting of natural gas, gaseous and/or liquid hydrocarbon, fuel oil, charcoal or coke, and combinations thereof, even more preferably being coke, yet more preferably petcoke, preferably in the form of solid particulates, more preferably the particulates having an average particle diameter of at most 6 mm, even more preferably at most 5, 4, 3, 2 or 1 mm, yet more preferably at most 500 µm, preferably at most 250, 200, 150, 100 or even 50 µm. The applicants have found that the introduction of the plasma via the first injector provides a very versatile option for introducing extra reducing agent, because it is highly tolerant with respect to the choice of reducing agent, in particular with respect to its state of matter but also with respect to the quantity that may be introduced.

In an embodiment of the process according to the present invention, comprising the step of adjusting the oxygen potential in the slag within the range of 10 to 10⁻⁹ Pa (i.e. 10⁻⁴ to 10⁻¹⁴ atm). By preference the oxygen potential in the slag is adjusted by the addition of the first and/or the second reducing agent. Thanks to the use of a plasma torch, virtually any oxygen potential may be combined with any amount of heat generation. In combination with the recovery of the one or more evaporable metals or metal compounds, also other metals may be extracted from the material introduced into the furnace. In one embodiment, the oxygen potential in the slag may be made suitable for selectively reducing metal compounds in the slag into a molten metal phase. Examples of typical such metals that are possible to reduce from the slag are Cu, Ni, Sn, Pb, Ag, Au, Pt and Pd. The molten metal phase may then be collected in the bottom of the furnace. The molten metal phase may then be removed, continuously or intermittently, via an outlet port. The furnace may for this purpose be provided with a refractory lining at the bottom. In another embodiment, where the material introduced into the furnace and thereby also the slag comprises sulphur or sulphur compounds, also a matte phase may be obtained. The oxygen potential in the slag may then be made suitable for preventing the sulphur from being oxidized. Metals may then be recovered in a molten matte phase. Examples of metals that are possible to recover from the slag in a matte phase are Fe, Cu, Ni, Sn, Pb, Ag, Au, Pt and Pd. The molten matte phase may then also be collected in the bottom of the furnace. The molten matte phase may be removed, continuously or intermittently, via an outlet port. In yet another embodiment, both a metal phase and a matte phase may be obtained, by proper adjustment of the oxygen potential and the sulphur content. As a non-limiting example, Au, Pt and Pd may be reduced into a metallic phase, whereas Cu and Ni may be made to form the matte phase. The matte phase typically appears on top of the metal phase, because it typically has a lower density than the metal phase and because the two phases remain more or less undissolved in each other. The matte phase and the metal phase may be extracted from the furnace by separate outlets or by a common outlet.

In an embodiment of the process according to the present invention, the afterburning is performed inside the single-chamber furnace. This brings the advantage of representing a much more compact equipment design, and hence a reduced investment cost.

In an embodiment of the process according to the present invention, the afterburning is comprising the introduction into the afterburning zone of an oxygen containing gas, preferably selected from air, oxygen enriched air and purified oxygen gas. The applicants have found that this option represents a relatively simple and low investment cost option for having the function of the afterburning zone performed. The applicants prefer to use simply air, as explained hereinabove.

In an embodiment of the process according to the present invention, the oxidized form of the at least one evaporable metal or metal compound is recovered from the gas as a dust. The applicants have found that this option is much safer as compared to the alternative where the metal is condensed to form a liquid metal phase, e.g. as explained in US 4,588,436, because the risk for spontaneous ignition and/or explosion of the exhaust gas from the furnace substantially ends at the outlet of the afterburning zone. The applicants have also found that this option is also relatively low in investment cost, e.g. relative to the alternative described in US 4,588,436.

In an embodiment of the process according to the present invention, the recovery of the oxidized form of the at least one evaporable metal or metal compound from the gas comprises the filtering of the gas containing the oxidized form of the at least one evaporable metal or metal compound using a filter, preferably a filter cloth. As explained above, the applicants prefer to use filter sleeves made of cloth of polytetrafluorethylene (PTFE). In such a gas filter, the gas velocities may be very low locally. Yet oxygen is expected to be present. It is therefore important for the process according to the present invention that substantially all of the reduced form of the metal or metal compound has been oxidised into its oxidized form, such that the risk for spontaneous ignition and/or explosion is acceptably low.

In an embodiment of the process according to the present invention, the process further comprises a cooling step upstream of the recovery of the oxidized form of the at least one evaporable metal or metal compound from the gas. A variety of suitable cooling methods may be applied, as explained hereinabove.

Typically the last step in the gas processing sequence is a blower or ventilator which pushes the gas from the recovery zone into the emission stack and also enhances the draft upstream by sucking the gas through the sequence of afterburning zone, optional cooling zone, and recovery zone.

In an embodiment of the process according to the present invention, the process comprises the formation of a molten metal phase, the process further comprising the step of removing the molten metal phase from the furnace. The applicants have found that the process according to the present invention may possibly lead to the formation of a separate molten liquid phase, caused by the reduction of less volatile metals to their elemental form. This may be a pure metal phase or a molten alloy. In such circumstances, it is highly convenient to remove the separate molten metal phase from the furnace as a separate by-product. In case of an alloy, one may prefer to process the alloy further such that at least one of the metals in the alloy is recovered separately from some of the other metals in the alloy. This further processing may comprise pyrometallurgical steps and/or electrolytic steps.

In an embodiment of the process according to the present invention, wherein the metallic charge comprises a slag and wherein the slag comprises sulphur and/or sulphur compounds, the process further comprising the step of forming a molten matte phase and a further step of removing the molten matte phase from the furnace. This is an option, optionally in addition to the recovery of a liquid molten metal or alloy from the process.

In an embodiment of the process according to the present invention, the metallurgical charge is introduced into the furnace as a liquid. This brings the advantage that the metallurgical charge does not need to be melted and/or smelted as part of the process operated in the apparatus and/or furnace, which is beneficial for the heat balance of the furnace and hence for the productivity of the process and its equipment, a.o. the furnace itself.

In an embodiment of the process according to the present invention, the metallurgical charge is a metallurgical slag, preferably the metallurgical slag being selected from a copper smelting slag, a copper refining slag, and combinations thereof, and wherein the process is producing a second slag. The applicants have found that the process (and the apparatus) according to the present invention is highly suitable for treating the feedstocks as specified.

In an embodiment of the process according to the present invention, the molten slag has an average temperature of less than 50 degrees Celsius above the liquidus temperature of the slag. This brings the advantage that the freeze lining of solid slag which forms against the inner surfaces of the furnace wall, and which offers protection for the refractory lining, is readily maintained at a sufficient thickness for providing adequate protection and heat insulation. Such freeze lining is highly beneficial in terms of the heat balance of the furnace, because it acts as thermal insulation between the hot liquid slag in the furnace and the furnace wall, which is preferably cooled to protect its mechanical integrity. The freeze lining therefore reduces the heat losses from the furnace to the cooled wall.

In an embodiment of the process according to the present invention, an oxide selected from CaO, Al₂O₃, and combinations thereof, is added to the slag in the fumer furnace, preferably at a temperature of at least 1000°C, preferably at least 1050°C, more preferably about 1150°C. This feature brings the further advantage that the final composition of the second slag after the fuming step may be further optimised and stabilised, and making the slag more suitable for particular end uses by possibly also affecting the mineralogy. The applicants have found that the addition at high temperature, such as specified, and in the molten state, is more effective in obtaining the desired effects.

In an embodiment of the process according to the present invention, the temperature of the slag in the furnace is at least at the temperature as specified in the previous paragraph, more preferably even higher, such as at least 1200 or 1250 or 1300°C, and more preferably about 1350°C. This brings the advantage of a more favourable equilibrium constant between the evaporable metal or metal compound and its precursor in the liquid slag. A further advantage of a higher temperature is that this facilitates the removal of the fumed slag from the furnace, the so-called "tapping", regardless whether that is done by overflow or by bottom tapping from a suitably located bottom tap hole in the furnace wall.

In an embodiment of the process according to the present invention, the process further comprises the step of cooling the second slag to become a solid, preferably the second slag first being removed from the furnace as a liquid. The advantage is that the fumer furnace may be released for further slag treatment while the second slag is cooling down. The slag may be cooled and/or solidified by contacting the slag with a cooling medium, such as air and/or water, possibly environment air.

In an embodiment of the process according to the present invention, wherein the second slag is cooled down, the cooling is performed by contacting the liquid second slag with water. The applicants have found that cooling with water is very effective and may be applied in a variety of ways resulting in relatively well controlled cooling rates.

In an embodiment of the process according to the present invention wherein the second slag is cooled, the second slag is cooled at a rate of at least 30 degrees Celsius per second, preferably at least 40 degrees Celsius per second, more preferably at least 50 or 60 degrees Celsius per second. The applicants have found that with the higher cooling rate, as specified, a higher amorphous content of the slag may be obtained, which is of interest for particular end uses, such as when the slag is intended for use as a binder in the construction industry.

In an embodiment of the process according to the present invention wherein the second slag is cooled down, the process is further comprising the step of grinding the solid second slag, preferably grinding the second slag into a powder.

In an embodiment of the process according to the present invention wherein the second slag is cooled, the second slag is cooled at a rate of less than 40 degrees Celsius per second, preferably at most 30 degrees Celsius per second, more preferably at most 20 degrees Celsius per second. The applicants have found that with the lower cooling rate, as specified, a lower amorphous content of the slag may be obtained, and hence a higher crystallinity, which is of interest for particular end uses, such as when the slag is intended for use as an aggregate or for decorative purposes.

In an embodiment of the process according to the present invention wherein a second slag is formed by the process, the process further comprises the step of adding the second slag as a binder or an aggregate during the production of an object for the construction industry. The applicants have found that the second slag may be used as a binder for aggregates, preferably as an active binder, preferably as a binder having pozzolanic activity. The applicants have found that the slag may act as a binder in replacement of cement, such as when partially replacing cement, such as Portland cement, but also as a binder for producing geopolymer compositions.

In an embodiment of the process according to the present invention wherein the slag is used as a binder during the production of an object for the construction industry, the object further comprises an aggregate, wherein the aggregate preferably comprises sand and/or the second slag.

In an embodiment of the process according to the present invention wherein the slag is used as a binder during the production of an object for the construction industry and the object further comprises an aggregate, the process further comprises the step of adding an activator during the production of the object. The applicants have found that the second slag may act as an active binder, capable of reacting with a suitable activator and thereby exhibiting strong binding properties for aggregates. The second slag may therefore be used in replacement of Portland cement, or as the only binder in an object in which case it is considered a "geopolymer", which are e.g. bringing fire- and heat-resistant properties to coatings, adhesives, composites, etcetera.

In an embodiment of the process according to the present invention using an activator, the activator is selected from the group consisting of sodium hydroxide, NaOH, potassium hydroxide, KOH, sodium silicate, Na₂SiO₃, potassium silicate, K₂SiO₃, and combinations thereof, preferably the activator being NaOH.

In an embodiment of the process according to the present invention wherein an object for the construction industry is formed, the object for the construction industry is a construction element.

In an embodiment of the process according to the present invention wherein a construction element is formed, the construction element is selected from the list consisting of a tile, a paver, a block, a concrete block, and combinations thereof.

In an embodiment of the process according to the present invention wherein an object for the construction industry is formed, the object for the construction industry is having a foamed structure.

In an embodiment of the use according to the present invention, the metallurgical charge is selected from a copper smelting slag and a copper refining slag, and combinations thereof.

In an embodiment of the use according to the present invention, the evaporable metal or metal compound is selected from zinc, lead, tin, bismuth, cadmium, indium, germanium, and combinations thereof.

In an embodiment of the process according to the present invention, at least a part of the process is electronically monitored and/or controlled, preferably by a computer program. The applicants have found that the control of steps from the process according to the present invention electronically, preferably by a computer program, brings the advantage of a much better processing, with results that are much more predictable and which are closer to the process targets. For instance on the basis of temperature measurements, if desired also pressure and/or level measurements and/or in combination with the results of chemical analyses of samples taken from process streams and/or analytical results obtained on-line, the control program may control the equipment relating to the supply or removal of electrical energy, supply of heat or of a cooling medium, a flow and/or a pressure control. The applicants have found that such monitoring or control is particularly advantageous with steps that are operated in continuous mode, but that it may also be advantageous with steps that are operated in batch or semi-batch. In addition and preferably, the monitoring results obtained during or after the performance of steps in the process according to the present invention are also of use for the monitoring and/or control of other steps as part of the process according to the present invention, and/or of processes that are applied upstream or downstream of the process according to the present invention, as part of an overall process within which the process according to the present invention is only a part. Preferably the entire overall process is electronically monitored, more preferably by at least one computer program. Preferably the overall process is electronically controlled as much as possible.

The applicants prefer that the computer control also provides that data and instructions are passed on from one computer or computer program to at least one other computer or computer program or module of the same computer program, for the monitoring and/or control of other processes, including but not limited to the processes described in this document.

### EXAMPLE 1

In this example 1, a furnace was provided equipped with 3 plasma generators.

The furnace, also called "the apparatus", "the reactor" or "the fumer", had a total height of bottom to top feed port of about 7.34 m. The furnace top was formed by a dome comprising the top feed port and the off-gas evacuation duct. Below the top dome having a height of 1.09 m, the furnace comprised a top section, cylindrical around a vertical axis, of about 3.00 m high having an outer diameter of 5.50 m. Below this top section, the furnace tapered down over a height distance of about 1.66 ending in a bottom cylindrical section having a diameter of about 3.19 m and a height of 1.00 m. The bottom dome had a height of 0.60m. The bottom cylindrical section had a height of 1.00 m, and the tapered section a height of 1.66 .

During operation, the furnace was supposed to contain a molten liquid bath up to at least above the highest opening of the entry points of the plasma quality first hot gases and the extra hot gases. The applicants prefer for that purpose to maintain a liquid level in the furnace that is at least as high as the bottom of the tapered section. More preferably, the liquid level is kept somewhat higher, somewhere in the height of the tapered section. If needed, the level may be allowed to rise up to above the tapered section, but it should stay below the level at which the static head becomes too much of a burden for introducing the first hot gases and/or the extra gases such that bath agitation would suffer.

The furnace shell was provided as a doublewalled water-cooled alloyed steel structure, except for the sections well protected by refractory lining, and the space inside the double walls during operation being provided with flowing cooling water as part of a pump around circuit. This cooling is provided to protect the structural integrity, especially the mechanical strength, of the reactor wall. The cooling also causes a part of the liquid slag inside the furnace to solidify against the wall in a so-called "freeze lining", below the liquid level but due to splashing also against most of the furnace wall above the liquid level. This solid freeze lining is protecting the walls against many forms of chemical and mechanical wear. It also provides thermal insulation, thus reducing the heat that may be lost from the furnace content to the cooling water. Because also some molten metal phase may possibly be formed during the process, the bottom cylindrical section and the bottom dome were lined with a suitable refractory material, in this case a combination of insulating bricks, wear lining and refractory concrete. Most of these sections were not made part of the water cooling system.

In the wall of the bottom cylindrical section, and hence below the liquid level during operation, were provided along the perimeter at the same height, and about equidistantly, three (3) plasma generators (PG) for injecting their hot gases into the furnace through tuyeres in a direction perpendicular to the furnace wall.

A plasma generator is a device that produces very hot gas, at least partially transformed into plasma. Typical gas temperatures are 3500-5000°C. This gas is heated by electrical energy. A high voltage difference over two electrodes creates an electric arc between the electrodes. In this reactor in operation, air was blown through the arc and heated up by the energy from the arc. As the electric current is increased, more air may be heated and more power may be transferred to the air. The PG power (W - expressed in Watt) is defined as voltage (V - Volt) * electrical current (A - Ampere). In the operation of this type of plasma, there is a relation between the PG nominal power and the amount of air that may be blown through the PG.

The three plasma generators of the reactor in the example had a nominal power of 3 MW, and during the furnace operation each one was fed with an amount of pressurized air in the range of 300-900 Nm³/h. At the reference enthalpy of 3.5 kWh/Nm3 for the gas produced, the plasma generators were each capable of producing 857 Nm3 of such plasma-quality hot gases as "primary gas".

The PG's were not fitted directly into the reactor wall. They were blowing their first hot (plasma-generated and plasma quality) gases into the furnace through a tuyere. The tuyere is a nozzle forming an opening in the reactor, through which the hot gases may be fed into the reactor. This tuyere may further be used to mix secondary volumes of natural gas and/or additional air into the hot gases from the PG, if needed. Preferably the applicants maintain a substantial volume of secondary gases through the tuyere at all times when there is a hot liquid bath present in the furnace. The purpose is that, even if the PG would need to be shut down and/or removed, that there remains sufficient gas flowing through the tuyere to keep the hot liquid from entering the tuyere, and avoid the risk that some liquid would flow upstream into the tuyere where it is cooled and solidifies, and which would represent a significant burden for its removal before the tuyere is again fully suitable for its intended use.

During operation, a further 90-200 Nm³/h of natural gas was added to the first hot gases from each PG through holes in the corresponding tuyere. Also additional air, at a rate in the range of 100-250 Nm³/h was typically added through each one of these tuyeres. These volumes thus qualify as secondary gas volumes.

The natural gas that was used in this example comprised 84.206 %vol of methane, 3.646 %vol of ethane, 0.572 %vol of propane and 9.966 %vol of nitrogen. The balance of <1 %volume was made up of higher alkanes, primarily butanes and pentanes.

Opposite of each plasma generator-tuyere combination was provided a further tuyere for injecting extra gas into the furnace, thus also 3 for the entire furnace. These further tuyeres or injectors represent the second submerged injectors according to the present invention, They were also arranged for injecting their extra gases in a direction perpendicular to the furnace wall, but a change to the preferred option for injecting at an angle upward into the bath is planned.

The second submerged injectors were constructed using a tuyere of the same type as used downstream of the plasma generators. These tuyeres, and hence also the tuyeres downstream of the PG's, are water cooled, they are cylindrical of shape, double walled, and protrude through the furnace wall into the furnace space below the level of the liquid bath that is expected to be in the furnace during operation. The tuyeres are provided for injecting secondary gasses into the double wall of the tuyere. The inner cylinder of the tuyere is provided with a plurality of holes that allow the secondary gasses into the centre volume of the tuyere through which the primary gasses are passing, which in case of an upstream PG would be the plasma-quality hot gases generated in the PG itself. The holes are preferably provided as spouts for giving the gas an extra velocity, in order to promote the mixing of the secondary gasses with the primary gasses passing through the tuyere. With the second submerged injectors, the PG was replace by a simple pipe protruding through the tuyere in the direction of the liquid bath and preferably substantially protruding as far as the tuyere extends into the furnace. Through this pipe could be pushed the primary gas, such as compressed air, optionally complemented with an amount of natural gas. An amount of further reducing agent, such as fine powdered coal, may be mixed into the primary gas or one of the components thereof.

To each one of the three further injectors was during operation fed an amount of the total of primary and secondary gasses of 300-600 Nm³/h of compressed air in which was mixed an amount of 30-60 Nm³/h of natural gas and, when appropriate, about 150-200 kg/hr of powder coal as extra reducing agent. The powder coal had an average particle size of 120 µm. The gas pressure upstream of the further tuyere was 6 bar gauge. The gas velocity in the further tuyere was typically during the operation higher than 330 m/s.

For injecting the powder coal, a double pressurized vessel system was used. The top vessel was acting as a pressure lock: it remained at atmospheric pressure when it was being filled from a hopper located on top of the pressure vessel, typically through a discharge valve. The hopper was filled by means of mechanical transport, typically using a feeding belt or screw, but also optionally by means of big bag unloading. After filling, this vessel was pressurized to the injection pressure. Subsequently the bottom vessel, which is kept at injection pressure, could be filled by discharging content from the top vessel into the bottom vessel. From the bottom vessel, a weight-regulated feeding system was provided to feed the powder coal into the injection air. Air and powder coal were then transported by pressure to the further injectors and into the liquid slag. The advantage of the double vessel system is that the inflow of reductant in the reactor could be made to remain uninterrupted.

The tuyeres, plasma generators and injectors were all water-cooled.

On top of the furnace was provided a radiation water cooler, provided as a double-walled metal cylinder in which the furnace exhaust gasses are passing through the centre of the cylinder, and cooling water is pushed through the wall of the cylinder.

In between the furnace top and the radiation water cooler, environment air is allowed to enter and to mix with the furnace exhaust gasses. The evaporated zinc and the CO present in the gas come into contact with the oxygen in the air, at the high temperature of the gas, these substances spontaneously ignite and form an afterburning zone. Thanks to the substantial draft inside the furnace and the water cooler, the exhaust gases flow at a high velocity. The environment air is allowed to enter through properly designed openings such that the air mixes fast and intensively with the exhaust gases. As a result, a stable flame front is established inside the radiation water cooler and some of its radiation heat is radiated downward back from the afterburning zone into the furnace onto the liquid bath in the furnace. The furnace top and the radiation water cooler are also provided with a plurality of injection points through which air under pressure may be injected into the furnace exhaust gases. This capability may be used simultaneously with allowing environment air to enter through the openings. Preferably, however, the openings for allowing the environment air to enter are substantially closed, and substantially all the required oxygen is introduced via the injection points. This mode of operation is preferred because the entry of oxygen is more stable and better controllable than the alternatives in which draft air is allowed to come in.

Inside the afterburner zone, the gas reaches temperatures of up to 1500 °C.

The gas leaving the afterburning zone was about at a temperature of 1200°C. Downstream of the radiation water cooler, about 6-7000 litres/hour of water was injected into the gas stream. This spray cooling step reduces the gas temperature down to about 220°C.

The wet gas from the spray cooling step was routed to a gas filter in which porous PTFE sleeves are provided over cylindrical stubs and the sleeves are retaining the dust represented by the oxidised form of the evaporable metal or metal compound formed in the afterburning zone.

Downstream of the gas filter, a ventilator is providing the suction from the furnace and for blowing the filtered gas into the emission stack.

The fuming process and furnace were operated in batch mode. The operating batches reported below consisted of a well-defined and sequence of distinguishable process steps. During the different process steps, more or less electrical power, powder coal, air and natural gas were fed into the reactor, according to the desired effect. The operation of the PG's, tuyeres and further injectors - or tuyeres - varied according to the process step. The different steps are now described in detail.

First process step: liquid filling of the furnace:
At the start of the batch, 76900 kg of liquid slag from the upstream copper smelter was fed in 4 slag pots with a net weight of approximately 19 tons each as measured by the weighing device on the bridge crane transferring the slag pots between different furnaces.

In the upstream copper smelter, the slag is wellmixed before it is poured from the smelting furnace. The slag composition may therefore be considered as being homogeneous. The composition of most metals in the slag was measured by inductively coupled plasma atomic emission spectrometry (ICP-AES), also referred to as inductively coupled optical emission spectrometry (ICP-OES), and sometimes simply referred to as ICP, and for SiO₂ by X-ray Diffraction (XRF). The XRD technique used was Quantitative X-ray Diffraction Analysis using Topas Academic Software V5, used Al₂O₃ as internal standard..

**Table I: Feed slag composition**

| Element (wt%) | Analysis |
|---|---|
| Cu | 0.60 |
| Pb | 0.46 |
| Sn | 0.11 |
| Ni | 0.04 |
| Fe | 30.63 |
| Si | 0.00 |
| Al | 0.00 |
| Zn | 11.48 |
| Bi | 0.00 |
| As | 0.00 |
| Sb | 0.00 |
| CaO | 3.09 |
| SiO2 | 25.07 |
| Al₂O₃ | 6.88 |

For this process step, the PG's were set at a power level of 1400 kW each, and an average air flow of about 437 Nm³/h per PG as primary gas. In addition were used the following secondary gasses. Natural gas flow through the tuyere was controlled at 125 Nm³/h. Air flow through the tuyere was controlled at a level of 100 Nm³/h.

The total flow of primary and secondary gasses through the further injectors as the second submerged injectors was set per injector at 380 Nm³/h of air, natural gas was added at a rate of 44 Nm³/h. Powder coal injection was not activated yet in this process step.

### Second process step: fuming step

After filling of the liquid slag, the fuming step was started. In this step, input of energy and reducing agent are increased to promote the volatilization of zinc as vapour.

The PG's were put to a power level of 2500 kW each, and an average primary air flow of 714 Nm³/h per PG. In addition were used the following secondary gasses. Natural gas was added to the each of the tuyeres downstream of the PG's, and this at a rate of 148 Nm³/h. Additional air flow through the tuyere was set at 100 Nm³/h.

The total flow of primary and secondary gasses through the further injectors were fed with air at 380 Nm³/h per injector. Natural gas was added to each injector at 44 Nm³/h. The powder coal injection to each injector was set at 180 kg/h.

The input of energy and reducing agent caused the fuming of volatile compounds from the liquid slag. The most volatile element was Zn. It was present in the slag as zinc oxide (ZnO). The temperature in the reactor was kept in a range of 1180-1250°C, assuring the slag remained fluid. Thanks to the various reducing agents, i.e. the powder coal and the various inputs of natural gas, ZnO reduced to metallic zinc (Zn). At atmospheric pressure Zn may be vaporized at a temperature above 906°C. Zn thus evaporated from the slag bath and was transported as part of the process gases from the furnace to the furnace exhaust gas treatment equipment.

In the off-gas evacuation duct of the reactor, large amounts of air were mixed with the process gases, causing complete afterburning of the process gases. Any remaining CO, Zn, H₂ become in that step fully oxidized. The zinc in vapour form oxidizes to ZnO forming a solid particle. This ZnO thus formed a dust in the combusted process off-gas stream. This post combustion or after-burning step is followed by a cooling step. At the exit of the cooling step the temperature of the process gases was below 220°C. The process gases were subsequently filtered in a bag filter with PTFE cloths. After the filtration, the process gases were evacuated to atmosphere through a stack. The ZnO dust particles were recovered in the filter, cooled and stored in a dust silo. From the silo, the Zn-rich dust product could be unloaded into silo trucks for sale.

Samples were taken during the fuming, and analysed with the fast but slightly less accurate method XRF. When the desired Zn level in the slag in the furnace was reached, the fuming was stopped and the trimming step was started.

### Third process step: trimming

The purpose of this step was to oxidize the last remaining powder coal in the furnace charge and to heat up the slag to a more suitable tapping temperature. The target temperature was 1220-1250°C.

The PG's were kept operating at a power level of 2500 kW each, and with an average primary air flow of 714 Nm³/h per PG. In addition were used the following secondary gasses. The natural gas flow through the tuyere was set at 102 Nm³/h. Air flow through the tuyere was set at 100 Nm³/h.

As the total flow of primary and secondary gasses through the extra injectors, these second submerged injectors were each fed with 380 Nm³/h of air and 44 Nm³/h of natural gas. The powder coal injection was discontinued during this trimming step.

No slag sample was taken after completion of the trimming step. Tapping was immediately started.

### Fourth process step: slag tapping and granulation

The purpose of this step is to extract the liquid slag from the reactor. The tap hole located in the side of the reactor, was drilled open and the liquid slag was allowed to flow out of the reactor in a launder. From that launder, the slag product was granulated by means of a water granulation system in which a large volume of water was sprayed into the falling slag stream, thereby solidifying the liquid slag and breaking up the solid formed into particles of ±1 mm.

The PG's continued to operate during this tapping and granulation step at a power level of 2000 kW each, with an average primary air flow of 606 Nm³/h per PG. As secondary gasses, a natural gas flow to the tuyere of 128 Nm³/h was installed, and then air flow directly to the tuyere was set at 100 Nm³/h.

The extra injectors were also continued to operate with air at a rate of 380 Nm³/h per injector and natural gas at 44 Nm³/h in total for primary plus secondary gasses. The powder coal injection was discontinued.

Samples were taken of the final product after granulation. The composition is considered to be close to the composition of the slag immediately after the fuming step.

Further operating parameters for the PG's in each process step are shown in Table II, in which the "Enthalpy" is calculated from the input power to the PG and the air flow that is fed to the PG.

**Table II: PG operating parameters**

| Step | Air/Natural Gas Volume Ratio | Enthalpy kWh/Nm³ |
|---|---|---|
| Filling | 5.5 | 3.2 |
| Fuming | 5.5 | 3.5 |
| Trimming | 8 | 3.5 |
| Granulating | 5.5 | 3.3 |

The evolution of the slag composition during the batch is illustrated by Table III, showing the results of analyses of slag samples that were taken after each step:

**Table III: Evolution of the Slag Composition**

| Element (wt%) | Feed | After Filling | After Fuming | Granulated |
|---|---|---|---|---|
| Cu | 0.60 | 0.57 | 0.48 | 0.42 |
| Pb | 0.46 | 0.44 | 0.03 | 0.025 |
| Sn | 0.11 | 0.10 | 0.08 | 0.07 |
| Ni | 0.04 | 0.05 | 0.03 | 0.03 |
| Fe | 30.63 | 30.80 | 35.63 | 35.8 |
| Zn | 11.48 | 11.08 | 1.64 | 1.58 |
| CaO | 3.09 | 3.10 | 3.78 | 3.75 |
| SiO2 | 25.07 | 25.15 | 29.64 | 29.82 |
| Al₂O₃ | 6.88 | 6.95 | 7.58 | 7.74 |

### Output material composition

This batch produced about 10500 kg of filter dust, with a composition as shown in the Table IV, the result of an ICP analysis of a representative sample:

**Table IV: Filter dust product composition**

| Filter Dust | Wt% |
|---|---|
| Cu | 0.09 |
| Sn | 0.09 |
| Pb | 2.98 |
| Zn | 73.46 |
| Ni | 0.00 |
| Fe | 0.91 |
| Bi | 0.49 |
| As | 0.00 |
| Cl | 0.79 |
| Sb | 0.00 |
| S | 0.05 |
| Al | 0.05 |
| Co | 0.05 |
| Cd | 0.00 |

A second batch was performed for comparison purposes, during which the further tuyeres had not yet been installed. In order to provide a similar amount of reducing agent during the fuming step, the same amount of carbon was introduced by introducing coarse petcoke having a particle size in the range of 6-10 mm via the feed port.

The amount and composition of liquid slag feed was very comparable to the first batch, as were the feeding time, trimming time and tapping time. Primarily the fuming time differed.

The amounts and compositions of the product after granulation and of the filter dust were comparable.

The time required, for the fuming step to obtain a very similar Zn content in the final slag, was significantly higher in this comparative batch as compared to the batch according to the invention that was described above. This means that the comparative batch had a significantly lower zinc fuming rate as compared to the working example, hence that the present invention significantly increased the zinc fuming rate during the fuming step.

### EXAMPLE 2

In this example 2, the same furnace was used as in Example 1, but with a different configuration relating to the second submerged gas injection. The natural gas supply was the same, as well as the quality thereof.

At the same level or height of the three plasma generator-tuyere combinations was provided this time only one further injector-tuyere combination as a single second submerged injector for injecting extra gas and fine coke into the furnace. The tuyere was water-cooled and a constant rate of 350-400 Nm³/h of air was injected through the tuyere and subsequently through the holes in the inner wall of the tuyere. The natural gas supply was not used in this example.

The injector positioned inside the further injector-tuyere combination was feeding extra gases in the liquid slag bath in a direction perpendicular to the furnace wall. During operation was fed an amount of 100-400 Nm³/h of compressed air as primary gasses to the further injector, in which was mixed an amount of, when appropriate, about 100-700 kg/hr of powder coal as extra reducing agent. The powder coal had an average particle size of 120 µm. The pressure of the compressed gas upstream of the second submerged injector assembly was 6 bar gauge.

The gas velocity in the further injector-tuyere combination was during the operation typically higher than 150 m/s.

First process step: liquid filling of the furnace:
The same procedure, qualities and amounts were used as in this step as part of Example 1, with the following exceptions.

The flow of secondary gasses through the single further tuyere as part of the single further injector-tuyere combination was set at 350 Nm³/h of air, and no natural gas was added. The flow of primary gasses through the further injector as part of the single further injector-tuyere combination was set at 200 Nm³/h of air. Fine coke injection was not activated yet in this process step.

### Second process step: fuming step

The same procedure as in Example 1 was applied.

The PG's were again put to a power level of 2500 kW each, and an average primary air flow of 714 Nm³/h per PG. In addition were used the following secondary gasses. Natural gas was added to each of the tuyeres downstream of the PG's, and this at a rate of 148 Nm³/h. Additional air flow through the tuyere was set at 100 Nm³/h.

The secondary gas flow through the further tuyere as part of the single further injector-tuyere combination was 350 Nm³/h of air, to which no natural gas was added. As primary gas, the flow through the further injector as part of the further injector-tuyere combination was set at 200 Nm³/h of air. Fine coke injection was set at 700 kg/h in this process step.

The temperature in the reactor was kept in a range of 1180-1250°C, assuring the slag remained fluid. Thanks to the various reducing agents, i.e. the powder coal and the various inputs of natural gas, ZnO reduced to metallic zinc (Zn). Zn thus evaporated from the slag bath and was transported as part of the process gases from the furnace to the furnace exhaust gas treatment equipment.

Samples were taken during the fuming, and analysed with the fast but slightly less accurate method XRF. When the desired Zn level in the slag in the furnace was reached, the fuming was stopped and the trimming step was started.

### Third process step: trimming

The target temperature was again 1220-1250°C.

The PG's were kept operating at a power level of 2500 kW each, and with an average air flow of 714 Nm³/h per PG. In addition were used the following secondary gasses. The natural gas flow through the tuyere was set at 102 Nm³/h. Air flow through the tuyere was set at 100 Nm³/h.

The secondary gas flow through the further tuyere as part of the single further injector-tuyere combination was set at 350 Nm³/h of air, and no natural gas was added. The primary gas flow through the further injector as part of the single further injector-tuyere combination was set at 200 Nm³/h of air. Fine coke injection was not activated yet in this process step.

No slag sample was taken after completion of the trimming step. Tapping was immediately started.

### Fourth process step: slag tapping and granulation

The same procedure as in Example 1 was applied.

The PG's again continued to operate during this tapping and granulation step at a power level of 2000 kW each, with an average primary air flow of 606 Nm³/h per PG. As secondary gasses were used a natural gas flow to the tuyere of 128 Nm³/h, and an air flow directly to the tuyere of 100 Nm³/h.

The flow of secondary gasses through the further tuyere as part of the single further injector-tuyere combination was 350 Nm³/h of air, and no natural gas was added. The primary gas flow through the further injector as part of the single further injector-tuyere combination was set at 200 Nm³/h of air. Fine coke injection was not activated yet in this process step.

Samples were taken of the final product after granulation. The composition is considered to be close to the composition of the slag immediately after the fuming step.

The further operating parameters for the PG's in each process step were the same as shown in Table II as part of Example 1.

The end results of this example were very similar to those of Example 1, only were they again obtained in a shorter time than with the batch performed for comparison reasons as part of Example 1.

The applicants found that a significant production rate increase could be established with the embodiments according to the present invention, also with Example 2. The applicants believe that this effect is due to a combination of (i) higher bath agitation, (ii) more stripping gas, (iii) more reducing agent, and probably most importantly (iv) the use of a solid reducing agent having a much smaller particle size, such that the reducing agent is much more reactive. This effect allows to reach the target fuming operating conditions much faster as compared with the coarse petcoke. The combination of the beneficial effects allowed that the fuming step was much faster in full operation, as shown by the much faster increase in the heat that needed to be removed from the afterburning zone, and also that the trimming step could be reduced in time very significantly, almost with an order of magnitude, because the required time could be reduced from about a quarter of an hour to as low as 2-3 minutes. The fuming furnace with the second submerged injector(s) could be operated more stably, at a higher throughput, and closer to the maximum of its capabilities.

Having now fully described this invention, it will be appreciated by those skilled in the art that the invention can be performed within a wide range of parameters within what is claimed, without departing from the scope of the invention, as defined by the claims. It should be noted that the disclosed embodiments are, unless specifically specified, not considered part of the claimed invention per se.

## Claims

1. A single-chamber furnace for fuming at least one evaporable metal or metal compound from a metallurgical charge comprising a bath furnace susceptible to contain a molten charge up to a determined level, whereby the furnace is equipped with at least one nontransferred plasma torch for the generation of plasma-quality first hot gases and with at least one first submerged injector for injecting the first hot gases from the plasma torch below the determined level, whereby the furnace is further comprising an afterburning zone for oxidising the at least one evaporable metal or metal compound in the fuming gas, downstream of the furnace top, to form an oxidised form of the at least one evaporable metal or metal compound, a cooling zone for cooling the gas that is formed in the afterburning zone, and a recovery zone, downstream of the cooling zone, for recovering the oxidized form of the at least one evaporable metal or metal compound from the gas formed in the afterburning zone and cooled in the cooling zone, **characterized in that** the furnace is further equipped with at least one second submerged injector different from the first submerged injector for injecting extra gas into the furnace below the determined level.

2. The furnace according to claim 1 wherein the at least one second injector is aiming its extra gas towards a second volume as part of the internal space of the furnace below the predetermined level that is different from the first volume into which the at least one first injector is aiming the plasma quality first hot gases.

3. The furnace according to any one of the preceding claims comprising at least two and preferably at least three first injectors distributed along a horizontal perimeter of the furnace side wall, whereby the at least one second submerged injector is aiming its extra gas towards a volume as part of the internal space of the furnace below the predetermined level about close to the furnace vertical axis and/or the at least one second submerged injector being located along the furnace side wall at about equal distance in between the locations of the two closest of the at least two first injectors.

4. The furnace according to any one of the preceding claims wherein the cooling zone comprises a radiation water cooler followed by a spray cooler.

5. The furnace according to any one of the preceding claims wherein the recovery zone comprises a gas filtering zone.

6. A process for fuming at least one evaporable metal or metal compound from a metallurgical charge using the furnace according to any one of the preceding claims comprising the steps of:
• introducing the metallurgical charge comprising the at least one evaporable metal or metal compound to the furnace and forming a bath of molten charge up to the determined level;
• fuming an amount of at least one evaporable metal or metal compound, from the bath using the plasma-quality hot gases from the at least one plasma torch and at least one reducing agent, thereby producing fuming gas comprising the evaporable metal or metal compound;
• afterburning in the afterburning zone the fuming gas to oxidize the at least one evaporable metal or metal compound into an oxidized form of the at least one evaporable metal or metal compound,
• extracting the gas formed in the furnace from the furnace and recovering in the recovery zone the oxidized form of the at least one evaporable metal or metal compound from the gas formed in the afterburning step;
**characterized in that** during at least a part of the fuming step extra gas is injected by the at least one second injector into the bath and below the determined level, thereby increasing the amount of fumes comprising the evaporable metal or metal compound.

7. The process according to claim 6 wherein the furnace comprises a plurality of second injectors, and wherein the amount of extra gas that is injected via each second injector is at least 10% of the amount of first hot gases that may be generated by the single element of the at least one plasma torch having the highest power rating when this torch is delivering first hot gases having an enthalpy content of at least 3.5 kWh/Nm³, expressed in volumetric units at normal conditions.

8. The process according to any one of claims 6-7 wherein the extra gas injected via the at least one second injector is thermally treated upstream of the at least one second injector in order to modify its enthalpy content, preferably the thermal treatment of the extra gas being performed by using at least one heat exchanger.

9. The process according to any one of claims 6-8 wherein the extra gas injected via the at least one second injector is comprising at least one first reducing agent.

10. The process according to any one of claims 6-9 wherein the at least one evaporable metal or metal compound is a metal in its elemental form or an evaporable metal containing compound, preferably the metal being selected from the group consisting of zinc, lead, tin, bismuth, cadmium, indium, germanium, and combinations thereof and also preferably the metal containing compound being selected from a chloride, an oxide, a sulphide, and combinations thereof.

11. The process according to any one of claims 6 to 10 wherein the oxidized form of the at least one evaporable metal or metal compound is recovered from the gas as a dust.

12. The process according to any one of claims 6 to 11 wherein the metallurgical charge is a metallurgical slag and wherein the process is producing a second slag.

13. The process according to claim 12 further comprising the step of cooling the second slag to become a solid, preferably the second slag first being removed from the furnace as a liquid.

14. The process according to claim 13 further comprising the step of adding the second slag as a binder or an aggregate during the production of an object for the construction industry.

15. Use of the furnace according to any one of claims 1-5 for fuming at least one evaporable metal or metal compound from a metallurgical charge.

## Patentansprüche

1. Ein Einkammer-Ofen zum Verdampfen von zumindest einem verdampfbaren Metall oder zumindest einer verdampfbaren Metallverbindung aus einer metallurgischen Charge, welcher einen Badofen umfasst, der bis zu einem eingestellten Niveau eine geschmolzene Charge enthalten kann, wobei der Ofen mit mindestens einem nichtübertragenden Plasmabrenner für die Erzeugung von ersten Heißgasen in Plasmaqualität und mit mindestens einem ersten untergetauchten Injektor zum Einspritzen der ersten Heißgase von dem Plasmabrenner unter dem eingestellten Niveau ausgestattet ist, wobei der Ofen ferner eine Nachbrennzone zum Oxidieren des zumindest einen verdampfbaren Metalls oder der zumindest einen verdampfbaren Metallverbindung im Rauchgas, unterhalb der Ofendecke, umfasst, um eine oxidierte Form des zumindest einen verdampfbaren Metalls oder der zumindest einen verdampfbaren Metallverbindung zu bilden, eine Kühlzone zum Abkühlen des Gases, das in der Nachbrennzone gebildet wird, und eine Rückgewinnungszone, der Kühlzone nachgelagert, zum Rückgewinnen der oxidierten Form des zumindest einen verdampfbaren Metalls oder der zumindest einen verdampfbaren Metallverbindung aus dem in der Nachbrennzone gebildeten und in der Kühlzone gekühlten Gas, **dadurch gekennzeichnet, dass** der Ofen ferner mit mindestens einem zweiten untergetauchten Injektor, sich vom ersten untergetauchten Injektor unterscheidend, ausgestattet ist, um extra Gas in den Ofen unter dem eingestellten Niveau einzuspritzen.

2. Der Ofen nach Anspruch 1, wobei der mindestens eine zweite Injektor sein extra Gas gegen ein zweites Volumen als Teil des Innenraums des Ofens unter dem voreingestellten Niveau richtet, welches sich vom ersten Volumen unterscheidet, in das der mindestens eine erste Injektor die ersten Heißgase in Plasmaqualität richtet.

3. Der Ofen nach irgendeinem der vorigen Ansprüche, der mindestens zwei und bevorzugt mindestens drei erste Injektoren umfasst, verteilt entlang eines horizontalen Umfangs der Ofenseitenwand, wobei der mindestens eine zweite untergetauchte Injektor sein extra Gas gegen ein Volumen als Teil des Innenraums des Ofens unter dem voreingestellten Niveau etwa dicht bei der vertikalen Achse des Ofens richtet und/oder sich der mindestens eine zweite untergetauchte Injektor entlang der Ofenseitenwand in etwa gleichem Abstand zwischen den Positionen der zwei nächsten der mindestens zwei ersten Injektoren befindet.

4. Der Ofen nach irgendeinem der vorigen Ansprüche, wobei die Kühlzone einen Strahlwasserkühler gefolgt von einem Sprühkühler umfasst.

5. Der Ofen nach irgendeinem der vorigen Ansprüche, wobei die Rückgewinnungszone eine Gasfilterzone umfasst.

6. Ein Verfahren zum Verdampfen von zumindest einem verdampfbaren Metall oder zumindest einer verdampfbaren Metallverbindung aus einer metallurgischen Charge unter Verwendung des Ofens nach irgendeinem der vorigen Ansprüche, welches folgende Schritte umfasst:
• Einbringen der metallurgischen Charge, welche das zumindest eine verdampfbare Metall oder die zumindest eine verdampfbare Metallverbindung umfasst, in den Ofen und Bilden eines Bades geschmolzener Charge bis zu einem eingestellten Niveau;
• Verdampfen einer Menge von zumindest einem verdampfbaren Metall oder einer verdampfbaren Metallverbindung, aus dem Bad unter Verwendung der Heißgase in Plasmaqualität von dem mindestens einen Plasmabrenner und zumindest eines Reduktionsmittels, wodurch Rauchgas erzeugt wird, das das verdampfbare Metall oder die verdampfbare Metallverbindung umfasst;
• Nachbrennen des Rauchgases in der Nachbrennzone, um das zumindest eine verdampfbare Metall oder die zumindest eine verdampfbare Metallverbindung in eine oxidierte Form des zumindest einen verdampfbaren Metalls oder der zumindest einen verdampfbaren Metallverbindung zu oxidieren;
• Extrahieren des im Ofen gebildeten Gases aus dem Ofen und Rückgewinnen der oxidierten Form des zumindest einen verdampfbaren Metalls oder der zumindest einen verdampfbaren Metallverbindung aus dem im Nachbrennschritt gebildeten Gas in der Rückgewinnungszone;
**dadurch gekennzeichnet, dass** während zumindest eines Teils des Verdampfschrittes durch den mindestens einen zweiten Injektor extra Gas in das Bad und unter dem eingestellten Niveau eingespritzt wird, wodurch die Menge an Rauch erhöht wird, der das verdampfbare Metall oder die verdampfbare Metallverbindung umfasst.

7. Das Verfahren nach Anspruch 6, wobei der Ofen eine Vielzahl von zweiten Injektoren umfasst, und wobei die Menge an extra Gas, das über jeden zweiten Injektor eingespritzt wird, mindestens 10 % der Menge an ersten Heißgasen beträgt, die durch das einzige Element des mindestens einen Plasmabrenners erzeugt werden können, der die höchste Nennleistung hat, wenn dieser Brenner erste Heißgase mit einem Enthalpiegehalt von mindestens 3,5 kWh/Nm³, ausgedrückt in volumetrischen Einheiten unter normalen Bedingungen, abgibt.

8. Das Verfahren nach irgendeinem der Ansprüche 6 bis 7, wobei das über den mindestens einen zweiten Injektor eingespritzte extra Gas vor dem mindestens einen zweiten Injektor thermisch behandelt wird, um seinen Enthalpiegehalt zu ändern, wobei die thermische Behandlung des extra Gases bevorzugt unter Verwendung von mindestens einem Wärmetauscher durchgeführt wird.

9. Das Verfahren nach irgendeinem der Ansprüche 6 bis 8, wobei das über den mindestens einen zweiten Injektor eingespritzte extra Gas mindestens ein erstes Reduktionsmittel umfasst.

10. Das Verfahren nach irgendeinem der Ansprüche 6 bis 9, wobei das zumindest eine verdampfbare Metall oder die zumindest eine verdampfbare Metallverbindung ein Metall in seiner elementaren Form oder eine verdampfbare metallhaltige Verbindung ist, wobei das Metall bevorzugt ausgewählt ist aus der Gruppe bestehend aus Zink, Blei, Zinn, Bismut, Cadmium, Indium, Germanium, und Kombinationen davon, und ebenso bevorzugt die metallhaltige Verbindung ausgewählt ist aus einem Chlorid, einem Oxid, einem Sulfid, und Kombinationen davon.

11. Das Verfahren nach irgendeinem der Ansprüche 6 bis 10, wobei die oxidierte Form des zumindest einem verdampfbaren Metalls oder der zumindest einen verdampfbaren Metallverbindung aus dem Gas als ein Staub zurückgewonnen wird.

12. Das Verfahren nach irgendeinem der Ansprüche 6 bis 11, wobei die metallurgische Charge eine metallurgische Schlacke ist und wobei das Verfahren eine zweite Schlacke erzeugt.

13. Das Verfahren nach Anspruch 12, welches ferner den Schritt des Abkühlens der zweiten Schlacke umfasst, um ein Feststoff zu werden, wobei die zweite Schlacke bevorzugt zuerst als eine Flüssigkeit aus dem Ofen entfernt wird.

14. Das Verfahren nach Anspruch 13, welches ferner den Schritt des Zusetzens der zweiten Schlacke als ein Bindemittel oder ein Aggregat während der Herstellung eines Gegenstands für die Bauindustrie umfasst.

15. Verwendung des Ofens nach irgendeinem der Ansprüche 1 bis 5 zum Verdampfen von zumindest einem verdampfbaren Metall oder zumindest einer verdampfbaren Metallverbindung aus einer metallurgischen Charge.

## Revendications

1. Four à chambre unique pour l'évaporation d'au moins un métal évaporable ou composé métallique évaporable à partir d'une charge métallurgique comprenant un four à bain susceptible de contenir une charge fondue jusqu'à un niveau déterminé, selon lequel le four est équipé d'au moins une torche à plasma non-transférée pour la génération de premiers gaz chauds de qualité plasma et d'au moins un premier injecteur immergé pour l'injection des premiers gaz chauds de la torche à plasma sous le niveau déterminé, selon lequel le four comprend en outre une zone de postcombustion pour oxyder le au moins un métal évaporable ou composé métallique évaporable dans le gaz d'évaporation, en aval du haut du four, pour former une forme oxydée du au moins un métal évaporable ou composé métallique évaporable, une zone de refroidissement pour refroidir le gaz qui est formé dans la zone de postcombustion, et une zone de récupération, en aval de la zone de refroidissement, pour récupérer la forme oxydée du au moins un métal évaporable ou composé métallique évaporable depuis le gaz formé dans la zone de postcombustion et refroidi dans la zone de refroidissement, **caractérisé en ce que** le four est en outre équipé d'au moins un deuxième injecteur immergé différent du premier injecteur immergé pour l'injection de gaz supplémentaire dans le four sous le niveau déterminé.

2. Four selon la revendication 1, dans lequel le au moins un second injecteur dirige son gaz supplémentaire vers un second volume faisant partie de l'espace interne du four sous le niveau prédéterminé qui est différent du premier volume, dans lequel le au moins un premier injecteur dirige les premiers gaz chauds de qualité plasma.

3. Four selon l'une quelconque des quelconque des revendications précédentes, comprenant au moins deux et de préférence au moins trois premiers injecteurs distribués le long d'un périmètre horizontal de la paroi latérale du four, selon lequel le au moins un second injecteur immergé dirige son gaz supplémentaire vers un volume faisant partie de l'espace interne du four sous le niveau prédéterminé près de l'axe vertical du four et/ou le au moins un second injecteur immergé étant situé le long de la paroi latérale du four à une distance à peu près égale entre les emplacements des deux plus près des au moins deux premiers injecteurs.

4. Four selon l'une quelconque des revendications précédentes, dans lequel la zone de refroidissement comprend un refroidisseur à eau par rayonnement suivi par un refroidisseur à pulvérisation.

5. Four selon l'une quelconque des revendications précédentes, dans lequel la zone de récupération comprend une zone de filtration de gaz.

6. Procédé d'évaporation d'au moins un métal évaporable ou composé métallique évaporable à partir d'une charge métallurgique en utilisant le four selon l'une quelconque des revendications précédentes, comprenant les étapes :
- d'introduction de la charge métallurgique comprenant le au moins un métal évaporable ou composé métallique évaporable dans le four et de formation d'un bain de charge fondue jusqu'au niveau déterminé ;
- d'évaporation d'une quantité d'au moins un métal évaporable ou composé métallique évaporable, depuis le bain en utilisant les gaz chauds de qualité plasma de la au moins une torche à plasma et au moins un agent réducteur, produisant ainsi des gaz d'évaporation comprenant le métal évaporable ou composé métallique évaporable ;
- de postcombustion dans la zone de postcombustion des gaz d'évaporation pour oxyder le au moins un métal évaporable ou composé métallique évaporable dans une forme oxydée du au moins un métal évaporable ou composé métallique évaporable,
- d'extraction des gaz formés dans le four depuis le four et de récupération dans la zone de récupération de la forme oxydée du au moins un métal évaporable ou composé métallique évaporable depuis les gaz formés dans l'étape de postcombustion ;
**caractérisé en ce que** pendant au moins une partie de l'étape d'évaporation, un gaz supplémentaire est injecté par le au moins un second injecteur dans le bain et sous le niveau déterminé, augmentant ainsi la quantité de vapeurs comprenant le métal évaporable ou composé métallique évaporable.

7. Procédé selon la revendication 6, dans lequel le four comprend une pluralité de seconds injecteurs, et dans lequel la quantité de gaz supplémentaire qui est injecté via chaque second injecteur est d'au moins 10 % de la quantité de premiers gaz chauds qui peuvent être générés par le seul élément de la au moins une torche à plasma présentant la puissance nominale la plus élevée lorsque cette torche fournit des premiers gaz chauds ayant une enthalpie d'au moins 3,5 kWh/Nm³, exprimée en unités volumétriques dans les conditions normales.

8. Procédé selon l'une quelconque des revendications 6-7, dans lequel le gaz supplémentaire injecté via le au moins un second injecteur est thermiquement traité en amont du au moins un second injecteur afin de modifier son enthalpie, de préférence le traitement thermique du gaz supplémentaire étant réalisé par utilisation d'au moins un échangeur thermique.

9. Procédé selon l'une quelconque des revendications 6-8, dans lequel le gaz supplémentaire injecté via le au moins un second injecteur comprend au moins un premier agent réducteur.

10. Procédé selon l'une quelconque des revendications 6-9, dans lequel le au moins un métal évaporable ou composé métallique évaporable est un métal dans sa forme élémentaire ou un composé contenant un métal évaporable, de préférence le métal étant sélectionné dans le groupe constitué du zinc, du plomb, de l'étain, du bismuth, du cadmium, de l'indium, du germanium, et des combinaisons de ceux-ci et également de préférence le composé contenant un métal étant sélectionné parmi un chlorure, un oxyde, un sulfure et de combinaisons de ceux-ci.

11. Procédé selon l'une quelconque des revendications 6 à 10, dans lequel la forme oxydée du au moins un métal évaporable ou composé métallique évaporable est récupérée des gaz comme une poussière.

12. Procédé selon l'une quelconque des revendications 6 à 11, dans lequel la charge métallurgique est une scorie métallurgique et dans lequel le procédé produit une seconde scorie.

13. Procédé selon la revendication 12, comprenant en outre l'étape de refroidissement de la seconde scorie pour qu'elle devienne un solide, de préférence la seconde scorie étant d'abord retirée du four comme un liquide.

14. Procédé selon la revendication 13, comprenant en outre l'étape d'ajout de la seconde scorie comme un liant ou un aggrégat pendant la production d'un objet pour l'industrie de la construction.

15. Utilisation du four selon l'une quelconque des revendications 1-5 pour l'évaporation d'au moins d'un métal évaporable ou composé métallique évaporable à partir d'une charge métallurgique.
